(19) Europäisches Patentamt
European Patent Office
Office européen des brevets

(11) **EP 4 708 110 A1**

(12) **EUROPEAN PATENT APPLICATION**
published in accordance with Art. 153(4) EPC

(43) Date of publication:
**11.03.2026 Bulletin 2026/11**

(21) Application number: **24806364.6**

(22) Date of filing: **29.04.2024**

(51) International Patent Classification (IPC):
**G06F 30/20** *(2020.01)* **B60W 60/00** *(2020.01)*

(52) Cooperative Patent Classification (CPC):
**B60W 60/00; G06F 30/20;** G06F 2119/02

(86) International application number:
**PCT/CN2024/090697**

(87) International publication number:
**WO 2024/235008 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310546008**

(71) Applicant: **Shenzhen Yinwang Intelligent
Technologies Co., Ltd.
Shenzhen, Guangdong 518110 (CN)**

(72) Inventors:
• **CHEN, Long**
  **Shenzhen, Guangdong 518129 (CN)**
• **GAO, Lutao**
  **Shenzhen, Guangdong 518129 (CN)**
• **GAO, Yongqiang**
  **Shenzhen, Guangdong 518129 (CN)**

(74) Representative: **Maiwald GmbH
Elisenhof
Elisenstraße 3
80335 München (DE)**

(54) **REACTION MODEL CONSTRUCTION METHOD, PARAMETER CALIBRATION METHOD FOR REACTION MODEL AND RELATED APPARATUS**

(57) A reaction model building method, a parameter calibration method for a reaction model, and a related apparatus are disclosed, and are applied to the field of intelligent driving technologies. The method includes: obtaining first information, and building a reaction model based on the first information. The first information includes information about a first risk point or a second risk point, the first risk point is an actual risk point that occurs on a road on which a first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment. The reaction model indicates an action behavior of the first vehicle after the first risk point or the second risk point occurs. This method can cover most dangerous driving scenarios, thereby properly evaluating an autonomous driving capability, and improving autonomous driving safety.

FIG. 2

**Description**

This application claims priority to Chinese Patent Application No. 202310546008.7, filed with the China National Intellectual Property Administration on May 15, 2023 and entitled "REACTION MODEL BUILDING METHOD, PARAMETER CALIBRATION METHOD FOR REACTION MODEL, AND RELATED APPARATUS", which is incorporated herein by reference in its entirety.

**TECHNICAL FIELD**

This application relates to the field of intelligent driving technologies, and in particular, to a reaction model building method, a parameter calibration method for a reaction model, and a related apparatus.

**BACKGROUND**

An autonomous driving technology is used to sense and determine, based on an artificial intelligence technology, an environment via sensing apparatuses such as a sensor, a camera, a radar, and a laser, so as to implement autonomous driving. This can greatly improve driving efficiency. With rapid development of the autonomous driving technology, autonomous driving safety is increasingly concerned by people.

Currently, industry consensus on an acceptable autonomous driving capability is that autonomous driving needs to avoid a reasonably foreseeable and avoidable accident in an operational design domain. A commonly used reference model for evaluating "avoidable" is a reaction model of a focussed average human driver (careful and competent human driver, CC Driver). The reaction model may be used to evaluate whether an accident that may occur in a specific driving scenario is avoidable for an average human driver, so as to further evaluate the autonomous driving capability.

However, a current reaction model still cannot cover most dangerous driving scenarios. Consequently, the autonomous driving capability is improperly evaluated, affecting autonomous driving safety.

**SUMMARY**

Embodiments of this application provide a reaction model building method, a parameter calibration method for a reaction model, and a related apparatus, to cover most dangerous driving scenarios, thereby properly evaluating an autonomous driving capability, and improving autonomous driving safety.

According to a first aspect, an embodiment of this application provides a reaction model building method, applied to a first vehicle. The method may be performed by a communication apparatus. The communication apparatus may be a device, or may be a chip (system) or a circuit used in the device. This is not limited in this application. The method includes:

    obtaining first information, where the first information includes information about a first risk point or a second risk point, the first risk point is an actual risk point that occurs on a road on which the first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment; and
    building a reaction model based on the first information, where the reaction model indicates an action behavior of the first vehicle after the first risk point or the second risk point occurs.

This embodiment of this application provides the reaction model building method. The communication apparatus obtains the first information, and builds the reaction model based on the first information. The communication apparatus herein may also be a processor/chip that may be configured to execute computer-executable instructions. This is not limited in this embodiment of this application.

The first information in this embodiment of this application includes the information about the first risk point or the second risk point. The first risk point is the actual risk point that occurs on the road on which the first vehicle is located at the current moment, and the actual risk point may be understood as an event that threatens driving safety of the vehicle and that occurs at the current moment. The second risk point is the potential risk point that occurs on the road on which the first vehicle is located at the current moment and that triggers the third risk point. The third risk point is the actual risk point that occurs on the road on which the first vehicle is located in the first time period after the current moment. A potential risk point may be understood as an event that occurs at the current moment and that may affect the driving safety of the vehicle but does not pose an actual threat to the driving safety of the vehicle. A subsequent event triggered by the potential risk point poses a threat to the driving safety of the vehicle. It may be understood that, the second risk point may be used to provide an early warning for a reasonably foreseeable actual risk point in the first time period after the current moment. In this embodiment of this application, the reaction model built based on the first information indicates the action behavior of the first vehicle after the first risk point or the second risk point occurs.

In this embodiment of this application, a method for quickly building a reaction model of a careful and competent human driver in different autonomous driving scenarios is designed. A concept of potential risk point is introduced, so that more dangerous driving scenarios can be covered, definition logic of the actual risk point can be optimized, and an action behavior of the vehicle after the risk point occurs is more accurately indicated, to properly evaluate an autonomous driving capability, and improve autonomous driving safety.

With reference to the first aspect, in a possible implementation, the second risk point includes any one or more of the following:

a road section with a speed reduction sign, a road section with an attention sign, a road section with a static blind zone, a vehicle in an adjacent lane having a braking action, an adjacent vehicle being a large vehicle, or a warning signal of an adjacent vehicle.

In implementations of this application, a possible specific implementation of the second risk point is provided. Specifically, the second risk point may include but is not limited to, on the road on which the first vehicle is located, there is the road section with the speed reduction sign, the road section with the attention sign, the road section with the static blind zone, the vehicle in the adjacent lane has the braking action, the adjacent vehicle is the large vehicle, there is the warning signal of the adjacent vehicle, or the like. It may be understood that, the foregoing potential risk status may be used to provide an early warning for the reasonably foreseeable actual risk point in the first time period after the current moment. In this embodiment of this application, the concept of potential risk point is introduced, so that more dangerous driving scenarios can be covered, thereby properly evaluating the autonomous driving capability, and improving the autonomous driving safety.

With reference to the first aspect, in a possible implementation, the action behavior includes at least one of a vehicle braking behavior or a vehicle steering behavior.

In implementations of this application, a possible specific implementation of the action behavior of the first vehicle after the first risk point or the second risk point occurs is provided. Specifically, the action behavior may include but is not limited to at least one of the vehicle braking behavior or the vehicle steering behavior. The reaction model of an average human driver designed in this embodiment of this application integrates two pieces of action logic: steering and braking, comprehensively and actually reflects a difference between a defensive response and a stress response of the average human driver, and more accurately indicates the action behavior of the vehicle after the risk point occurs, thereby properly evaluating the autonomous driving capability, and improving the autonomous driving safety.

With reference to the first aspect, in a possible implementation, the first risk point is that an offset between a second vehicle and a center line of a lane in which the second vehicle is located is greater than a first threshold, the second vehicle is a vehicle that cuts in front of the first vehicle without turning on a turn signal, and a vehicle type of the second vehicle is not greater than a vehicle type of the first vehicle.

In implementations of this application, a possible specific implementation of the first risk point is provided. Specifically, in a scenario in which the second vehicle cuts in front of the first vehicle without turning on the turn signal and the vehicle type of the second vehicle is not greater than the vehicle type of the first vehicle, if the offset between the second vehicle and the center line of the lane in which the second vehicle is located is greater than the first threshold, this is determined as the first risk point. The first threshold is not a fixed value, and may be adjusted based on different application scenarios. It may be understood that in this embodiment of this application, in the scenario in which the second vehicle cuts in front of the first vehicle without turning on the turn signal, the second vehicle does not turn on the turn signal, is not a large vehicle, and does not have the braking action. Therefore, it may be considered that there is no potential risk point in the scenario, to be specific, no potential risk is posed to the driving safety of the first vehicle. In this case, the first risk point may be a moment at which the second vehicle shows a clear cut-in intention. Correspondingly, the reaction model built based on the first information indicates a non-defensive emergency action behavior of the first vehicle after the first risk point occurs in the scenario.

With reference to the first aspect, in a possible implementation, the second risk point is that a vehicle type of a third vehicle is greater than a vehicle type of the first vehicle, the third risk point is that the third vehicle laterally deviates, the third vehicle is adjacent to the first vehicle, and the third vehicle is a vehicle that cuts in front of the first vehicle without turning on a turn signal.

In implementations of this application, a possible specific implementation of the second risk point is provided. Specifically, in a scenario in which the third vehicle cuts in front of the first vehicle without turning on the turn signal, if the vehicle type of the third vehicle is greater than the vehicle type of the first vehicle, the third vehicle may be determined as the second risk point before the third vehicle performs a cut-in behavior, or if the third vehicle laterally deviates, the third vehicle is determined as the third risk point. It may be understood that in this embodiment of this application, in the scenario in which the third vehicle cuts in front of the first vehicle without turning on the turn signal, although the third vehicle does not turn on the turn signal, the third vehicle is a large vehicle adjacent to the first vehicle. Therefore, it may be considered that there is a potential risk point in the scenario, that is, a potential risk is posed to the driving safety of the first vehicle. In this case, the second risk point may be determined as a large vehicle (namely, the third vehicle) adjacent to the first vehicle.

Because the third vehicle is the large vehicle and has a clear cut-in action, lateral deviation of the third vehicle may be determined as the third risk point, namely, the actual risk point that may be triggered by the second risk point. It may be understood that the second risk point (a large vehicle adjacent to the first vehicle) may be used to provide an early warning for a reasonably foreseeable actual risk point (where the third vehicle laterally deviates) in the first time period after the current moment. Correspondingly, the reaction model built based on the first information indicates a defensive emergency action behavior of the first vehicle after the second risk point occurs in the scenario.

With reference to the first aspect, in a possible implementation, the first risk point is that a lateral vehicle body that is of a fourth vehicle and that appears in a field of view of the first vehicle is greater than a second threshold, the fourth vehicle, the first vehicle, and a fifth vehicle are located in a same lane, the fourth vehicle is located in front of the fifth vehicle, the fifth vehicle is located in front of the first vehicle, and the fifth vehicle is a vehicle that is cut out of the current lane.

In implementations of this application, a possible specific implementation of the first risk point is provided. Specifically, in a scenario in which the first vehicle meets the fourth vehicle that is in front of the fifth vehicle when the fifth vehicle in front of the first vehicle cuts out of the current lane, if the lateral vehicle body that is of the fourth vehicle and that appears in the field of view of the first vehicle is greater than the second threshold, this is determined as the first risk point. The second threshold is not a fixed value, and may be adjusted based on different application scenarios. It may be understood that in this embodiment of this application, in the scenario in which the fifth vehicle cuts out of the current lane and the first vehicle meets the fourth vehicle that is in front of the fifth vehicle, there is no potential risk point, to be specific, no potential risk is posed to the driving safety of the first vehicle. In this case, the first risk point may be a moment at which the lateral vehicle body that is of the fourth vehicle and that appears in the field of view of the first vehicle is greater than the second threshold. Correspondingly, the reaction model built based on the first information indicates a non-defensive emergency action behavior of the first vehicle after the first risk point occurs in the scenario.

With reference to the first aspect, in a possible implementation, the building the reaction model based on the first information includes:

when the first information includes the first risk point, determining second information, where the second information includes information about a first interval and a second interval, the first interval is an interval in which the first vehicle travels at a constant speed, the second interval is an interval in which the first vehicle brakes, and the second interval is after the first interval; and
building a first reaction model based on the first information and the second information, where the first reaction model indicates that after the first risk point occurs, the first vehicle travels at a constant speed in the first interval, and brakes in the second interval until stop.

In implementations of this application, a possible specific implementation of building the first reaction model is provided. Specifically, when the first information includes the first risk point, the second information is determined, and the first reaction model is built based on the first information and the second information. When the first information includes the first risk point, it indicates that the actual risk point occurs on the road on which the first vehicle is located at the current moment. In this case, the determined second information includes the information about the first interval in which the first vehicle travels at a constant speed and the information about the second interval in which vehicle braking is performed. Correspondingly, the first reaction model built based on the first information and the second information indicates a non-defensive emergency braking behavior of the first vehicle after the first risk point occurs in the scenario. To be specific, after the first risk point occurs, and after the first vehicle continuously travels at a constant speed in the first interval, the first vehicle starts to brake in the second interval, and reaches a maximum braking deceleration at a specific slope, to maintain deceleration until stop. The first reaction model built in this embodiment of this application can cover a driving scenario in which an actual risk point occurs, optimize definition logic of the actual risk point, and more accurately indicate a non-defensive emergency braking behavior of the vehicle after the actual risk point occurs, to properly evaluate the autonomous driving capability, and improve the autonomous driving safety.

With reference to the first aspect, in a possible implementation, the second information further includes any one or more of the following:
duration in which the first vehicle travels at a constant speed in the first interval, a start time point at which the first vehicle brakes in the second interval, a braking rate of the first vehicle, and a maximum braking deceleration of the first vehicle.

In implementations of this application, a possible specific implementation of the second information is provided. Specifically, when the first information includes the first risk point, the second information for building the first reaction model may include but is not limited to the duration in which the first vehicle travels at a constant speed in the first interval, the start time point at which the first vehicle brakes in the second interval, the braking rate of the first vehicle, and the maximum braking deceleration of the first vehicle. The first reaction model built based on the second information in this embodiment of this application can more accurately indicate the non-defensive emergency braking behavior of the vehicle after the actual risk point occurs.

With reference to the first aspect, in a possible implementation, the building the reaction model based on the first information includes:

when the first information includes the second risk point, determining third information, where the third information includes information about a third interval and a fourth interval, the third interval is an interval in which the first vehicle travels at a constant speed, the fourth interval is an interval in which the first vehicle brakes, and the fourth interval is after the third interval; and
building a second reaction model based on the first information and the third information, where the second reaction model indicates that after the second risk point occurs and before the third risk point occurs, the first vehicle travels in a current travelling state, and after the third risk point occurs, the first vehicle travels at a constant speed in the third interval, and brakes in the fourth interval until stop.

In implementations of this application, a possible specific implementation of building the second reaction model is provided. Specifically, when the first information includes the second risk point, the third information is determined, and the second reaction model is built based on the first information and the third information. When the first information includes the second risk point, it indicates that the potential risk point occurs on the road on which the first vehicle is located at the current moment, and may be used to provide an early warning for the reasonably foreseeable third risk point (namely, the actual risk point) in the first time period after the current moment. In this case, the determined third information includes the information about the third interval in which the first vehicle travels at a constant speed and the information about the fourth interval in which vehicle braking is performed. Correspondingly, the second reaction model built based on the first information and the third information indicates a defensive emergency braking behavior of the first vehicle after the second risk point occurs in the scenario. To be specific, after the second risk point occurs and before the third risk point occurs, the first vehicle keeps sliding, that is, travels in a current travelling state. After the third risk point occurs, and after the first vehicle continuously travels at a constant speed in the third interval, the first vehicle starts to brake in the fourth interval, and reaches a maximum braking deceleration at a specific slope, to maintain deceleration until stop. The second reaction model built in this embodiment of this application introduces the concept of potential risk point, and can cover a driving scenario in which a potential risk point occurs, optimize definition logic of the actual risk point, and more accurately indicate a defensive emergency braking behavior of the vehicle after the potential risk point occurs, to properly evaluate the autonomous driving capability, and improve the autonomous driving safety.

With reference to the first aspect, in a possible implementation, the third information further includes any one or more of the following:
duration in which the first vehicle travels at a constant speed in the third interval, a start time point at which the first vehicle brakes in the fourth interval, a braking rate of the first vehicle, and a maximum braking deceleration of the first vehicle.

In implementations of this application, a possible specific implementation of the third information is provided. Specifically, when the first information includes the second risk point, the third information for building the second reaction model may include but is not limited to the duration in which the first vehicle travels at a constant speed in the third interval, the start time point at which the first vehicle brakes in the fourth interval, the braking rate of the first vehicle, and the maximum braking deceleration of the first vehicle. The second reaction model built based on the third information in this embodiment of this application can more accurately indicate the defensive emergency braking behavior of the vehicle after the potential risk point occurs.

With reference to the first aspect, in a possible implementation, the building the reaction model based on the first information includes:

when the first information includes the first risk point, determining fourth information, where the fourth information includes information about a fifth interval and a sixth interval, the fifth interval is an interval in which the first vehicle travels in a straight line, the sixth interval is an interval in which the first vehicle steers, and the sixth interval is after the fifth interval; and
building a third reaction model based on the first information and the fourth information, where the third reaction model indicates that after the first risk point occurs, the first vehicle travels in a straight line in the fifth interval, and steers in the sixth interval until steering returns to center.

In implementations of this application, a possible specific implementation of building the third reaction model is provided. Specifically, when the first information includes the first risk point, the fourth information is determined, and the third reaction model is built based on the first information and the fourth information. When the first information includes the first risk point, it indicates that the actual risk point occurs on the road on which the first vehicle is located at the current moment. In this case, the determined fourth information includes the information about the fifth interval in which the first vehicle travels in a straight line and the information about the sixth interval in which vehicle steering is performed. Correspondingly, the third reaction model built based on the first information and the fourth information indicates a non-defensive emergency steering behavior of the first vehicle after the first risk point occurs in the scenario. To be specific, after the first risk point occurs, and after the first vehicle continuously travels in a straight line in the fifth interval, the first vehicle starts to steer in the sixth interval, reaches a maximum steering angle in a sine form, returns the steering angle to center, and then continues to travel in a straight line in a direction existing after the steering angle is returned to center. The third reaction model built in this embodiment of this application can cover a driving scenario in which an actual risk point occurs, optimize definition logic of the actual risk point, and more accurately indicate a non-defensive emergency steering behavior of the vehicle after the actual risk point occurs, to properly evaluate the autonomous driving capability, and improve the autonomous driving safety.

With reference to the first aspect, in a possible implementation, the fourth information further includes any one or more of the following:

duration in which the first vehicle travels in a straight line in the fifth interval, a peak value of a steering wheel angle at which the first vehicle steers in the sixth interval, and a steering wheel rotation cycle of the first vehicle.

In implementations of this application, a possible specific implementation of the fourth information is provided. Specifically, when the first information includes the first risk point, the fourth information for building the third reaction model may include but is not limited to the duration in which the first vehicle travels in a straight line in the fifth interval, the peak value of the steering wheel angle at which the first vehicle steers in the sixth interval, and the steering wheel rotation cycle of the first vehicle. The third reaction model built based on the fourth information in this embodiment of this application can more accurately indicate the non-defensive emergency steering behavior of the vehicle after the actual risk point occurs.

With reference to the first aspect, in a possible implementation, the building the reaction model based on the first information includes:

when the first information includes the second risk point, determining fifth information, where the fifth information includes information about a seventh interval and an eighth interval, the seventh interval is an interval in which the first vehicle travels in a straight line, the eighth interval is an interval in which the first vehicle steers, and the eighth interval is after the seventh interval; and

building a fourth reaction model based on the first information and the fifth information, where the fourth reaction model indicates that after the second risk point occurs and before the third risk point occurs, the first vehicle travels in a current travelling state, and after the third risk point occurs, the first vehicle travels in a straight line in the seventh interval, and steers in the eighth interval until steering returns to center.

In implementations of this application, a possible specific implementation of building the fourth reaction model is provided. Specifically, when the first information includes the second risk point, the fifth information is determined, and the fourth reaction model is built based on the first information and the fifth information. When the first information includes the second risk point, it indicates that the potential risk point occurs on the road on which the first vehicle is located at the current moment, and may be used to provide an early warning for the reasonably foreseeable third risk point (namely, the actual risk point) in the first time period after the current moment. In this case, the determined fifth information includes the information about the seventh interval in which the first vehicle travels in a straight line and the information about the eighth interval in which vehicle steering is performed. Correspondingly, the fourth reaction model built based on the first information and the fifth information indicates a defensive emergency steering behavior of the first vehicle after the second risk point occurs in the scenario. To be specific, after the second risk point occurs and before the third risk point occurs, the first vehicle keeps sliding, that is, travels in a current travelling state. After the third risk point occurs, and after the first vehicle continuously travels in a straight line in the seventh interval, the first vehicle starts to steer in the eighth interval, reaches a maximum steering angle in a sine form, returns the steering angle to center, and then continues to travel in a straight line in a direction existing after the steering angle is returned to center. The fourth reaction model built in this embodiment of this application introduces the concept of potential risk point, and can cover a driving scenario in which a potential risk point occurs, optimize definition logic of the actual risk point, and more accurately indicate a defensive emergency steering behavior of the vehicle after the potential risk point occurs, to properly evaluate the autonomous driving capability, and improve the autonomous driving safety.

With reference to the first aspect, in a possible implementation, the fifth information further includes any one or more of the following:

duration in which the first vehicle travels in a straight line in the seventh interval, a peak value of a steering wheel angle at which the first vehicle steers in the eighth interval, and a steering wheel rotation cycle of the first vehicle.

In implementations of this application, a possible specific implementation of the fifth information is provided. Specifically, when the first information includes the second risk point, the fifth information for building the fourth reaction model may include but is not limited to the duration in which the first vehicle travels in a straight line in the seventh interval, the peak value of the steering wheel angle at which the first vehicle steers in the eighth interval, and the steering wheel rotation cycle of the first vehicle. The fourth reaction model built based on the fifth information in this embodiment of this application can more accurately indicate the non-defensive emergency steering behavior of the vehicle after the potential risk point occurs.

According to a second aspect, an embodiment of this application provides a parameter calibration method for a reaction model, applied to a first vehicle. The method may be performed by a communication apparatus. The communication apparatus may be a device, or may be a chip (system) or a circuit used in the device. This is not limited in this application. The method includes:

obtaining sixth information, where the sixth information includes parameter information output by a reaction model, and the parameter information indicates a driving behavior of an average human driver corresponding to the first vehicle; the reaction model is built based on first information, the first information includes information about a first risk point or a second risk point, the first risk point is an actual risk point that occurs on a road on which the first vehicle is located at a first moment, the second risk point is a potential risk point that occurs on the road on which the first vehicle is located at the first moment and that triggers a third risk point, and the third risk point is an actual risk point that occurs on the road on which the first vehicle is located in a first time period after the first moment; and the reaction model indicates an action behavior of the first vehicle after the first risk point or the second risk point occurs; and

obtaining a target parameter through calibration based on the sixth information, where the target parameter is used to assess autonomous driving performance of the first vehicle.

This embodiment of this application provides the parameter calibration method for the reaction model. The communication apparatus obtains the sixth information, and obtains the target parameter through calibration based on the sixth information. The communication apparatus herein may also be a processor/chip that may be configured to execute computer-executable instructions. This is not limited in this embodiment of this application.

The sixth information in this embodiment of this application includes the parameter information output by the reaction model. The parameter information indicates the driving behavior of the average human driver corresponding to the first vehicle. The reaction model is built based on the first information, and indicates the action behavior of the first vehicle after the first risk point or the second risk point occurs. The first information includes the information about the first risk point or the second risk point. The first risk point is the actual risk point that occurs on the road on which the first vehicle is located at the first moment, and the actual risk point may be understood as an event that threatens driving safety of the vehicle and that occurs at the first moment. The second risk point is the potential risk point that occurs on the road on which the first vehicle is located at the first moment and that triggers the third risk point. The third risk point is the actual risk point that occurs on the road on which the first vehicle is located in the first time period after the first moment. A potential risk point may be understood as an event that occurs at the first moment and that may affect the driving safety of the vehicle but does not pose an actual threat to the driving safety of the vehicle. A subsequent event triggered by the potential risk point poses a threat to the driving safety of the vehicle. It may be understood that, the second risk point may be used to provide an early warning for a reasonably foreseeable actual risk point in the first time period after the first moment. In this embodiment of this application, the target parameter obtained through calibration based on the sixth information is used to assess autonomous driving performance of the first vehicle.

In this embodiment of this application, the target parameter obtained through calibration based on the parameter information output by the reaction model is used to assess the autonomous driving performance of the first vehicle. Because a concept of potential risk point is introduced into the reaction model, more dangerous driving scenarios can be covered, definition logic of the actual risk point can be optimized, and an action behavior of the vehicle after the risk point occurs is more accurately indicated. Therefore, based on the target parameter obtained through calibration based on the parameter information output by the reaction model, an autonomous driving capability can be properly evaluated, and autonomous driving safety can be improved.

Optionally, the reaction model according to the second aspect may be built by using the method according to the first aspect and any possible implementation of the first aspect.

With reference to the second aspect, in a possible implementation, when the reaction model includes a first reaction model or a second reaction model, the target parameter includes any one or more of the following:

a maximum braking deceleration of the first vehicle, a braking efficiency improvement time of the first vehicle, a braking efficiency improvement rate of the first vehicle, and a decision reaction time of the average human driver corresponding to the first vehicle.

The first reaction model indicates a braking behavior of the first vehicle after the first risk point occurs, and the second reaction model indicates a braking behavior of the first vehicle after the second risk point occurs.

In implementations of this application, a possible specific implementation of the reaction model is provided. Specifically, the reaction model for obtaining the target parameter through calibration may include the first reaction model or the second reaction model, where the first reaction model indicates the braking behavior of the first vehicle after the first risk point occurs, and the second reaction model represents the braking behavior of the first vehicle after the second risk point occurs. In this case, the target parameter obtained through calibration based on the parameter information output by the first reaction model or the second reaction model includes but is not limited to the maximum braking deceleration of the first vehicle, the braking efficiency improvement time of the first vehicle, the braking efficiency improvement rate of the first vehicle, and the decision reaction time of the average human driver corresponding to the first vehicle. According to this embodiment of this application, the target parameter obtained through calibration based on the parameter information output by the first reaction model or the second reaction model can be used to properly evaluate the autonomous driving capability, and improve the autonomous driving safety.

With reference to the second aspect, in a possible implementation, the maximum braking deceleration of the first vehicle is obtained by calibrating N frames of data with large braking decelerations in the parameter information after the first risk point or the second risk point occurs, where N is an integer greater than 0.

In implementations of this application, a possible specific implementation of the maximum braking deceleration of the first vehicle is provided. Specifically, an average of N frames (for example, 10 frames) of data that are in slice data and that have the large braking decelerations after the first risk point or the second risk point occurs may be selected as the maximum braking deceleration, to more accurately indicate a braking behavior of the average human driver corresponding to the first vehicle after the first risk point or the second risk point occurs.

With reference to the second aspect, in a possible implementation, the braking efficiency improvement time of the first vehicle is a difference between a braking saturation moment and a braking start moment, the braking start moment is obtained by calibrating at least two frames of data with small braking decelerations in the parameter information, and the braking saturation moment is obtained by calibrating at least two frames of data with large braking decelerations in the parameter information.

In implementations of this application, a possible specific implementation of the braking efficiency improvement time of the first vehicle is provided. Specifically, the braking start moment is obtained by calibrating the at least two frames of data with the small braking decelerations in the parameter information output by the reaction model, and the braking saturation moment is obtained by calibrating the at least two frames of data with the large braking decelerations in the parameter information output by the reaction model. The difference between the braking saturation moment and the braking start moment is the braking efficiency improvement time of the first vehicle. It may be understood that the small braking deceleration may mean that a braking deceleration is less than a preset threshold. The preset threshold is not a fixed value, and may be adjusted based on different application scenarios. For example, there may be two frames of data whose braking decelerations are 10% and 15% of the maximum braking deceleration. Similarly, the large braking deceleration may mean that a braking deceleration is greater than a preset threshold. The preset threshold is not a fixed value, and may be adjusted based on different application scenarios. For example, there may be two frames of data whose braking decelerations are 90% and 85% of the maximum braking deceleration. In this embodiment of this application, it is assumed that a braking efficiency improvement rate at a braking start time is the same as that at a time when the braking is about to be saturated. The braking saturation moment is reversely deduced by using a moment at which the braking deceleration is large, and the braking start moment is reversely deduced by using a moment at which the braking deceleration is small, so that a robust anti-interference braking efficiency improvement time can be obtained, to more accurately indicate a braking behavior of the average human driver corresponding to the first vehicle after the first risk point or the second risk point occurs.

With reference to the second aspect, in a possible implementation, the braking efficiency improvement rate of the first vehicle is obtained by calibrating at least one frame of data with a small braking deceleration and at least one frame of data with a large braking deceleration in the parameter information.

In implementations of this application, a possible specific implementation of the braking efficiency improvement rate of the first vehicle is provided. Specifically, the braking efficiency improvement rate of the first vehicle may be obtained by calibrating the at least one frame of data with the small braking deceleration and the at least one frame of data with the large braking deceleration in the parameter information. It may be understood that the small braking deceleration may mean that a braking deceleration is less than a preset threshold. The preset threshold is not a fixed value, and may be adjusted based on different application scenarios. For example, there may be at least one frame of data whose braking deceleration is 10% of the maximum braking deceleration. Similarly, the large braking deceleration may mean that a braking deceleration is greater than a preset threshold. The preset threshold is not a fixed value, and may be adjusted based on different application scenarios. For example, there may be at least one frame of data whose braking deceleration is 90% of the maximum braking deceleration. In this embodiment of this application, a braking deceleration change status in a middle section of a whole braking process of the first vehicle is selected, so that a more accurate braking efficiency improvement rate of the first vehicle can be obtained, to more accurately indicate a braking behavior of the average human driver corresponding to the first vehicle after the first risk point or the second risk point occurs.

With reference to the second aspect, in a possible implementation, the decision reaction time of the average human driver corresponding to the first vehicle is a difference between a braking start moment and an actual risk point occurrence moment, and the braking start moment is obtained by calibrating at least two frames of data with small braking decelerations in the parameter information.

In implementations of this application, a possible specific implementation of the decision reaction time of the average human driver corresponding to the first vehicle is provided. Specifically, the braking start moment is obtained by calibrating the at least two frames of data with the small braking decelerations in the parameter information, and the difference between the braking start moment and the actual risk point occurrence moment is used as the decision reaction time of the average human driver corresponding to the first vehicle, to more accurately indicate a braking behavior of the average human driver corresponding to the first vehicle after the first risk point or the second risk point occurs. It may be understood that the small braking deceleration may mean that a braking deceleration is less than a preset threshold. The preset threshold is not a fixed value, and may be adjusted based on different application scenarios. For example, there may be at least two frames of data whose braking decelerations are 10% and 15% of the maximum braking deceleration.

With reference to the second aspect, in a possible implementation, when the reaction model includes a third reaction model or a fourth reaction model, the parameter information includes any one or more of the following:

a maximum steering wheel angle of the first vehicle, steering wheel return-to-center duration of the first vehicle, and a decision reaction time of the average human driver corresponding to the first vehicle.

The third reaction model indicates a steering behavior of the first vehicle after the first risk point occurs, and the fourth reaction model indicates a steering behavior of the first vehicle after the second risk point occurs.

In implementations of this application, a possible specific implementation of the reaction model is provided. Specifically, the reaction model for obtaining the target parameter through calibration may include the third reaction model or the fourth reaction model, where the third reaction model indicates the steering behavior of the first vehicle after the first risk point occurs, and the fourth reaction model indicates the steering behavior of the first vehicle after the second risk point occurs. In this case, the target parameter obtained through calibration based on the parameter information output by the third reaction model or the fourth reaction model includes but is not limited to the maximum steering wheel angle of the first vehicle, the steering wheel return-to-center duration of the first vehicle, and the decision reaction time of the average human driver corresponding to the first vehicle. In this embodiment of this application, the target parameter obtained through calibration based on the parameter information output by the third reaction model or the fourth reaction model can be used to properly evaluate the autonomous driving capability, and improve the autonomous driving safety.

With reference to the second aspect, in a possible implementation, the maximum steering wheel angle of the first vehicle is obtained by calibrating M frames of data with large steering wheel angles in the parameter information after the first risk point or the second risk point occurs, where M is an integer greater than 0.

In implementations of this application, a possible specific implementation of the maximum steering wheel angle of the first vehicle is provided. Specifically, an average of M frames (for example, 10 frames) of data that are in slice data and that have the large steering wheel angles after the first risk point or the second risk point occurs may be selected as the maximum steering wheel angle, to more accurately indicate a steering behavior of the average human driver corresponding to the first vehicle after the first risk point or the second risk point occurs.

With reference to the second aspect, in a possible implementation, the steering wheel return-to-center duration of the first vehicle is a difference between a first return-to-center moment and a steering start moment, the steering start moment is obtained by calibrating at least two frames of data with small steering wheel angles in the parameter information, and the first return-to-center moment is obtained by calibrating at least two frames of data with large steering wheel angles in the parameter information.

In implementations of this application, a possible specific implementation of the steering wheel return-to-center duration of the first vehicle is provided. Specifically, the steering start moment is obtained by calibrating the at least two frames of data with the small steering wheel angles in the parameter information output by the reaction model, and the first return-to-center moment is obtained by calibrating the at least two frames of data with the large steering wheel angles in the parameter information output by the reaction model. The difference between the first return-to-center moment and the steering start moment is the steering wheel return-to-center duration of the first vehicle. It may be understood that the small steering wheel angle may mean that a steering wheel angle is less than a preset threshold. The preset threshold is not a fixed value, and may be adjusted based on different application scenarios. For example, there may be two frames of data whose steering wheel angles are 20% and 15% of the maximum steering wheel angle. Similarly, the large steering wheel angle may mean that a steering wheel angle is greater than a preset threshold. The preset threshold is not a fixed value, and may be adjusted based on different application scenarios. For example, there may be two frames of data whose steering wheel angles are 80% and 85% of the maximum steering wheel angle. In this embodiment of this application, it is assumed that a steering angle increase rate at a steering start time is the same as that at a time when the first steering is about to return to center. The first steering return-to-center moment is reversely deduced by using a moment at which the steering angle is large, and the steering start moment is reversely deduced by using a moment at which the steering angle is small, so that a robust anti-interference steering wheel return-to-center duration can be obtained, to more accurately indicate a steering behavior of the average human driver corresponding to the first vehicle after the first risk point or the second risk point occurs.

With reference to the second aspect, in a possible implementation, the decision reaction time of the average human driver corresponding to the first vehicle is a difference between a steering start moment and an actual risk point occurrence moment, and the steering start moment is obtained by calibrating at least two frames of data with small steering wheel angles in the parameter information.

In implementations of this application, a possible specific implementation of the decision reaction time of the average human driver corresponding to the first vehicle is provided. Specifically, the steering start moment is obtained by calibrating the at least two frames of data with the small steering wheel angles in the parameter information, and the difference between the steering start moment and the actual risk point occurrence moment is used as the decision reaction time of the average human driver corresponding to the first vehicle, to more accurately indicate a steering behavior of the average human driver corresponding to the first vehicle after the first risk point or the second risk point occurs. It may be understood that the small steering wheel angle may mean that a steering wheel angle is less than a preset threshold. The preset threshold is not a fixed value, and may be adjusted based on different application scenarios. For example, there may be at least two frames of data whose steering wheel angles are 20% and 15% of the maximum steering wheel angle.

According to a third aspect, an embodiment of this application provides a communication apparatus. The apparatus includes a module or a unit configured to perform the method according to any implementation of the first aspect.

In a possible design, the apparatus includes:

a processing unit, configured to obtain first information, where the first information includes information about a first risk point or a second risk point, the first risk point is an actual risk point that occurs on a road on which a first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment.

The processing unit is further configured to build a reaction model based on the first information. The reaction model indicates an action behavior of the first vehicle after the first risk point or the second risk point occurs.

In a possible implementation, the apparatus further includes:

a communication unit, configured to receive the first information.

The processing unit is specifically configured to obtain the first information through the communication unit.

For a method performed by the processing unit and the communication unit, refer to the method corresponding to the first aspect. Details are not described herein again.

For technical effect of the third aspect and any possible implementation, refer to description of technical effect corresponding to the first aspect and a corresponding implementation.

According to a fourth aspect, an embodiment of this application provides a communication apparatus. The apparatus includes a module or a unit configured to perform the method according to any implementation of the second aspect.

In a possible design, the apparatus includes:

a processing unit, configured to obtain sixth information, where the sixth information includes parameter information output by a reaction model, and the parameter information indicates a driving behavior of an average human driver corresponding to a first vehicle; the reaction model is built based on first information, the first information includes information about a first risk point or a second risk point, the first risk point is an actual risk point that occurs on a road on which the first vehicle is located at a first moment, the second risk point is a potential risk point that occurs on the road on which the first vehicle is located at the first moment and that triggers a third risk point, and the third risk point is an actual risk point that occurs on the road on which the first vehicle is located in a first time period after the first moment; and the reaction model indicates an action behavior of the first vehicle after the first risk point or the second risk point occurs.

The processing unit is further configured to obtain a target parameter through calibration based on the sixth information, where the target parameter is used to assess autonomous driving performance of the first vehicle.

In a possible implementation, the apparatus further includes:

a communication unit, configured to receive the sixth information.

The processing unit is specifically configured to obtain the sixth information through the communication unit.

For a method performed by the processing unit and the communication unit, refer to the method corresponding to the second aspect. Details are not described herein again.

For technical effect of the fourth aspect and any possible implementation, refer to description of technical effect corresponding to the second aspect and a corresponding implementation.

Optionally, in the communication apparatus according to any one of the third aspect and the fourth aspect and any one of the possible implementations,

in an implementation, the communication apparatus is a communication device; when the communication apparatus is the communication device, the communication unit may be a transceiver or an input/output interface, and the processing unit may be at least one processor; optionally, the transceiver may be a transceiver circuit; and optionally, the input/output interface may be an input/output circuit; or

in another implementation, the communication apparatus is a chip (system) or a circuit used in a communication device; and when the communication apparatus is the chip (system) or the circuit used in the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

According to a fifth aspect, an embodiment of this application provides a communication apparatus. The communication apparatus includes a processor. The processor is coupled to a memory, and may be configured to execute instructions in the memory, to implement the method according to any one of the first aspect and the second aspect and any one of the possible implementations. Optionally, the communication apparatus further includes the memory. Optionally, the communication apparatus further includes a communication interface, and the processor is coupled to the communication interface.

According to a sixth aspect, an embodiment of this application provides a communication apparatus. The apparatus includes a logic circuit and a communication interface. The communication interface is configured to receive information or send information. The logic circuit is configured to receive information or send information through the communication interface, to enable the communication apparatus to perform the method according to any one of the first aspect and the second aspect and any one of the possible implementations.

According to a seventh aspect, an embodiment of this application provides a computer-readable storage medium. The computer-readable storage medium is used to store a computer program (also referred to as code or instructions). When the computer program is run on a computer, the method according to any one of the first aspect and the second aspect and any one of the possible implementations is implemented.

According to an eighth aspect, an embodiment of this application provides a computer program product. The computer program product includes a computer program (also referred to as code or instructions). When the computer program is run, a computer is enabled to perform the method according to any one of the first aspect and the second aspect and any one of the possible implementations.

According to a ninth aspect, an embodiment of this application provides a chip. The chip includes a processor. The processor is configured to execute instructions. When the processor executes the instructions, the chip is enabled to perform the method according to any one of the first aspect and the second aspect and any one of the possible implementations. Optionally, the chip further includes a communication interface, and the communication interface is configured to receive a signal or send a signal.

According to a tenth aspect, an embodiment of this application provides a vehicle end. The vehicle end includes at least one communication apparatus according to the third aspect, the communication apparatus according to the fourth aspect, the communication apparatus according to the fifth aspect, the communication apparatus according to the sixth aspect, or the chip according to the ninth aspect.

In addition, in a process of performing the method according to any one of the first aspect and the second aspect and any one of the possible implementations, a process of sending information and/or receiving information in the method may be understood as a process of outputting information by a processor, and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

According to the foregoing principle, for example, sending information mentioned in the foregoing method may be understood as outputting information by the processor. For another example, receiving information may be understood as receiving input information by the processor.

Optionally, unless otherwise specified, operations such as transmission, sending, and receiving related to the processor may be more generally understood as operations such as outputting, receiving, and inputting of the processor if the operations do not conflict with actual functions or internal logic of the operations in related description.

Optionally, in a process of performing the method according to any one of the first aspect and the second aspect and any one of the possible implementations, the processor may be a processor specially configured to perform the method, or may be a processor, for example, a general-purpose processor, that performs the method by executing computer instructions in a memory. The memory may be a non-transitory (non-transitory) memory, for example, a read-only memory (Read-Only Memory, ROM). The memory and the processor may be integrated on a same chip, or may be disposed on different chips. A type of the memory and a manner in which the memory and the processor are disposed are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In embodiments of this application, the concept of potential risk point is introduced, so that more dangerous driving scenarios can be covered, the definition logic of the actual risk point can be optimized, and the action behavior of the vehicle after the risk point occurs is more accurately indicated, to properly evaluate the autonomous driving capability, and improve the autonomous driving safety.

## BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.

FIG. 1 is a diagram of a driver reaction model according to an embodiment of this application;
FIG. 2 is a schematic flowchart of a reaction model building method according to an embodiment of this application;
FIG. 3A is a diagram of a vehicle cut-in scenario according to an embodiment of this application;
FIG. 3B is a diagram of a vehicle cut-in scenario according to an embodiment of this application;
FIG. 3C is a diagram of a vehicle cut-in scenario according to an embodiment of this application;
FIG. 4A is a diagram of a small-vehicle cut-in scenario according to an embodiment of this application;
FIG. 4B is a diagram of a large-vehicle cut-in scenario according to an embodiment of this application;
FIG. 4C is a diagram of a preceding-vehicle cut-out scenario according to an embodiment of this application;
FIG. 5 is a diagram of a braking model and a steering model of a driver according to an embodiment of this application;
FIG. 6 is a schematic flowchart of a parameter calibration method for a reaction model according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip according to an embodiment of this application.

## DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to an embodiment may be included in at least one embodiment of this application. The phrase shown in various locations in the specification may not necessarily mean a same embodiment, and is not an independent or optional embodiment exclusive from another embodiment. A person skilled in the art can explicitly and implicitly understand that in embodiments of this application, unless otherwise specified or there is a logical conflict, terms and/or description in embodiments are consistent and may be mutually referenced, and technical features in different embodiments may be combined into a new embodiment based on an inner logical relationship between the technical features.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be noted that in this application, "indications" may include a direct indication, an indirect indication, an explicit indication, and an implicit indication. That a piece of indication information is used to indicate A can be understood as follows: The indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It should be noted that in this application, "sending" can be understood as "outputting", and "receiving" can be understood as "inputting". In "sending information to A", "to A" indicates only a direction of information transmission, A is a destination, and "sending information to A" is not necessarily directly performed over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

This application provides a reaction model building method and a parameter calibration method for a reaction model, which are applied to the field of intelligent driving technologies, for example, evaluation of an autonomous driving capability. To describe the solutions of this application more clearly, the following first describes some knowledge related to autonomous driving.

An autonomous driving technology is used to sense and determine, based on an artificial intelligence technology, an environment via sensing apparatuses such as a sensor, a camera, a radar, and a laser, so as to implement autonomous driving. This can greatly improve driving efficiency. Industry consensus on an acceptable autonomous driving capability is that autonomous driving needs to avoid a reasonably foreseeable and avoidable accident in an operational design domain.

A commonly used reference model for "reasonably foreseeable" is semantic-level quantization of a common driving scenario, where a statistical value of parameter distribution of a logical scenario is obtained by collecting statistics on actual road situations, and a reasonably foreseeable parameter range is found by using a concept of "small probability event". A commonly used reference model for "avoidable" is a reaction model of a careful and competent human driver (careful and competent human driver, CC Driver). The reaction model may be used to evaluate whether an accident that may occur in a specific driving scenario is avoidable for an average human driver, so as to further evaluate the autonomous driving capability.

If the autonomous driving can reach the foregoing risk avoidance level of the average driver in a reasonably foreseeable scenario, it may be determined that the autonomous driving meets a driving behavior safety criterion.

Currently, evaluation criteria used by an automated lane keeping system (automated lane keeping system, ALKS) are as follows: An autonomous driving system cannot pose a foreseeable and avoidable risk (accident) during operation, and needs to comply with local traffic regulations (except in a case in which an accident can be avoided only when a violation is required). A boundary of an "avoidable" risk is defined by using the reaction model of the average human driver, and a "foreseeable" accident scenario is defined by using a small probability event in logical scenario parameter space.

ALKS interaction scenarios are classified into avoidable and unavoidable scenarios. Thresholds for the scenarios are specified based on reaction of a simulated attentive average driver. Optionally, a specified operation speed may be less than 60 km/h. In this case, a collision avoidance capability of the human driver is mainly represented by a braking behavior. Therefore, standard braking models which can be applied to three driving logic scenarios, namely, adjacent-vehicle cut-in, preceding-vehicle cut-out, and preceding-vehicle braking, are proposed in an ALKS appendix.

Specifically, the reaction model of the average human driver is divided into three segments: perception (perception), decision (decision), and reaction (reaction). Correspondingly, parameters that need to be calibrated in the reaction model of the driver include a risk perceive (risk perceive) occurrence point, a perception time (perception time), a decision time (delay in decision), a maximum braking deceleration, and a braking efficiency improvement time.

However, there are still many parameters that are difficult to determine and standardize in the reaction model of the driver, for example, including but not limited to the following:

(1) Determining manners of a risk perceive occurrence point in different scenarios are not unified, which does not comply with driving cognition of the average human driver. The adjacent-vehicle cut-in is used as an example. A risk perceive occurrence point is that a lateral offset of an adjacent vehicle exceeds a lateral swing median of the adjacent vehicle that travels in a center of a lane during natural driving. If the adjacent vehicle has turned on a turn signal in advance, the risk perceive occurrence point is a time point at which the adjacent vehicle starts to change a lateral location. In the preceding-vehicle cut-out scenario, a risk perceive occurrence point is still calculated based on a swing amount. However, an actual risk in the scenario is that a preceding vehicle of a cut-out vehicle slowly travels. Therefore, the risk perceive occurrence point in the scenario is related to appearance of the preceding vehicle of the cut-out vehicle, but is not directly related to a cut-out action of the cut-out vehicle.

(2) Risk perception times and decision times in different scenarios are consistent, which also does not comply with the driving cognition of the average human driver. For example, in a cut-in scenario in which a turn signal is turned on, it is assumed that cut-in scenario parameters are set the same. In a case in which an adjacent vehicle does not turn on a turn signal, and in another case in which the adjacent vehicle turns on the turn signal in advance, the driver has clearly different reaction times from a time at which a cut-in action of the adjacent vehicle starts to a time at which the driver steps down a brake pedal. If a cut-in vehicle is a large vehicle, the driver may have released an acceleration pedal when the adjacent vehicle does not perform a clear cut-in action. In this case, reaction is more timely.

(3) The current reaction model provides only braking reaction logic of the driver. From pedal parsing to control applying, the model cannot directly solve a running status of the vehicle at a corresponding moment, and cannot uniquely quantify parameters of an avoidable scenario. In addition, there is also an analytical problem that actual braking efficiency cannot be solved directly. This is related to a road surface attachment coefficient, a tire temperature, and a braking pressure building time, and does not depends only on an opening degree of the brake pedal.

Therefore, because there are many parameters that are difficult to determine and standardize, the reaction model of the driver still cannot cover most dangerous driving scenarios. Consequently, the autonomous driving capability is improperly evaluated, affecting autonomous driving safety.

In view of this, this application designs a method for quickly building a reaction model of a careful and competent human driver (CC Driver) in different autonomous driving scenarios, and a parameter calibration method for the reaction model, to introduce a concept of potential risk point, optimize definition logic of an actual risk point, integrate two pieces of action logic: steering and braking, and comprehensively and actually reflect a difference between a defensive response and a stress response of an average human driver. The reaction model obtained by using the model building method in this application can cover more dangerous driving scenarios, and more accurately indicate an action behavior of a vehicle after a risk point occurs, to properly evaluate the autonomous driving capability, and improve the autonomous driving safety.

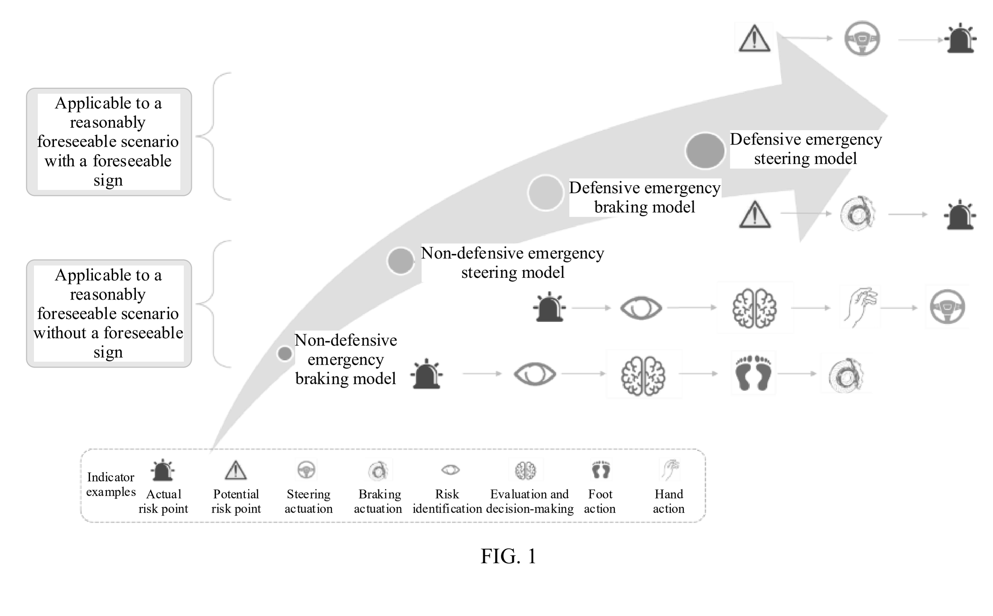

The following describes, with reference to FIG. 1 to FIG. 5, the reaction model building method and the parameter calibration method for the reaction model provided in embodiments of this application.

FIG. 1 is a diagram of a driver reaction model according to an embodiment of this application.

As shown in FIG. 1, the driver reaction model is a driver model research route applied to evaluation of an autonomous driving capability.

First, the driver reaction model divides standard operations of an average human driver into two actions and two stages. The two actions are a steering action and a braking action. The braking action may be further subdivided into actions of releasing an acceleration pedal, performing pedal migration, and stepping down a brake pedal. The two stages are a defensive stage and a stress stage.

Then, based on division of the two actions and the two phases, an appropriate action combination model can be obtained in differentiated scenarios. The details are as follows:

In a reasonably foreseeable driving scenario without a foreseeable sign (namely, without a potential risk point), a specific time point at which an actual risk point occurs (for example, an adjacent vehicle shows a clear cut-in intention) is first determined, and then risk identification, risk evaluation, and decision-making are performed. In a low-speed driving scenario, emergency braking is used, that is, a non-defensive emergency braking model is used after an actual risk point of a vehicle occurs. In a high-speed driving scenario with avoidance space, emergency steering is used, that is, a non-defensive emergency steering model is used after an actual risk point of a vehicle occurs.

In a reasonably foreseeable driving scenario with a foreseeable sign (namely, with a potential risk point), a specific time point at which the potential risk occurs (for example, a cut-in vehicle turns on a turn signal in advance, there is a pedestrian crosswalk ahead, or a school bus turns on a stop sign) is first determined. Then, whether there is lateral operation space is determined. If there is the lateral operation space, defensive steering is used to extend a lateral distance, that is, a defensive emergency steering model of the vehicle is used after the potential risk point occurs. If there is no lateral operation space, a vehicle speed is reduced to a proper speed, that is, a defensive emergency braking model of the vehicle is used after the potential risk point occurs. A defensive action model can complete related actions before an actual risk point occurs, so that the vehicle is in a safe and stable state. When the actual risk occurs, it may be taken a short time for risk identification, risk evaluation, and decision-making because of presence of psychological expectation, and a proper steering or braking action may be taken.

Based on the two actions and two phases of the standard operations of the average human driver in the reaction model in FIG. 1, embodiments of this application correspondingly provide a method for building the reaction model.

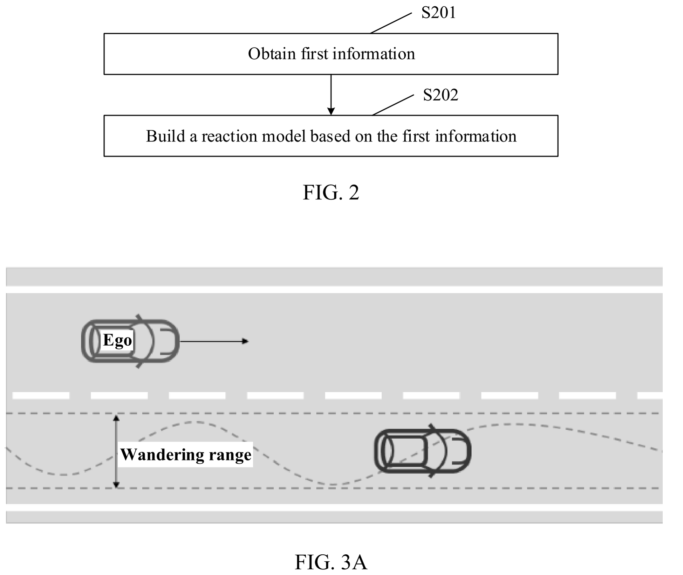

FIG. 2 is a schematic flowchart of a reaction model building method according to an embodiment of this application. The reaction model building method is applied to the field of intelligent driving technologies, for example, evaluation of an autonomous driving capability. The reaction model building method is specifically applied to a first vehicle, and includes but is not limited to the following steps:

S201: Obtain first information.
S202: Build a reaction model based on the first information.

It may be understood that, in embodiments of this application, a communication apparatus configured to obtain the first information and build the reaction model based on the first information may be a device equipped with a processor/chip that can be configured to execute computer-executable instructions, or may be a processor/chip that can be configured to execute computer-executable instructions. This is not limited in embodiments of this application. Optionally, the communication apparatus may be a processor/chip in an intelligent vehicle, and is configured to perform the reaction model building method in embodiments of this application, to cover more dangerous driving scenarios, and more accurately indicate an action behavior of the vehicle after a risk point occurs, so as to properly evaluate an autonomous driving capability, and improve autonomous driving safety.

The first information includes information about a first risk point or a second risk point.

The first risk point is an actual risk point that occurs on a road on which the first vehicle is located at a current moment, and the actual risk point may be understood as an event that threatens driving safety of the vehicle and that occurs at the current moment.

The second risk point is a potential risk point that occurs on the road on which the first vehicle is located at the current moment and that triggers a third risk point. The third risk point is an actual risk point that occurs on the road on which the first vehicle is located in a first time period after the current moment. A potential risk point may be understood as an event that occurs at the current moment and that may affect the driving safety of the vehicle but does not pose an actual threat to the driving safety of the vehicle. A subsequent event triggered by the potential risk point poses a threat to the driving safety of the vehicle.

It may be understood that, the second risk point may be used to provide an early warning for a reasonably foreseeable actual risk point in the first time period after the current moment. The first time period is not a fixed value, and may be adjusted based on different application scenarios.

In this embodiment of this application, the reaction model built based on the first information indicates an action behavior of the first vehicle after the first risk point or the second risk point occurs.

In a possible embodiment, the second risk point may include but is not limited to any one or more of the following:

on the road on which the first vehicle is located, a road section with a speed reduction sign, for example, a road section that affects a safety line of sight like a tunnel entrance, a sharp turn, a construction road section, or the top of a ramp, a deceleration lane, a ramp, or a downhill road section;
on the road on which the first vehicle is located, a road section with an attention sign, for example, a sign like falling rocks, crosswinds, slippery road, wildlife crossing, or road hump.
on the road on which the first vehicle is located, a road section with a static blind zone, where for example, when a vehicle overtakes another vehicle that is in an adjacent lane, a static blind zone exists in front of the another vehicle that is overtaken, and a pedestrian may cross;
a vehicle, in a lane adjacent to a lane in which the first vehicle is located, having a braking action;
an adjacent vehicle of the first vehicle being a large vehicle; or
an adjacent vehicle of the first vehicle correctly turning on a corresponding warning signal in advance before an action is performed, and the like.

It may be understood that, the foregoing potential risk status may be used to provide an early warning for the reasonably foreseeable actual risk point in the first time period after the current moment. A concept of potential risk point is introduced, so that more dangerous driving scenarios can be covered.

In a possible embodiment, the action behavior that is indicated by the reaction model and that is of the first vehicle after the first risk point or the second risk point occurs may include but is not limited to at least one of a vehicle braking behavior or a vehicle steering behavior.

It may be understood that, the reaction model integrates two pieces of action logic: steering and braking, comprehensively and actually reflects a difference between a defensive response and a stress response of the average human driver, and can more accurately indicate the action behavior of the vehicle after the risk point occurs.

In embodiments of this application, the method for quickly building a reaction model of a careful and competent human driver in different autonomous driving scenarios is designed. The concept of potential risk point is introduced, so that more dangerous driving scenarios can be covered, the definition logic of the actual risk point can be optimized, and the action behavior of the vehicle after the risk point occurs is more accurately indicated, to properly evaluate the autonomous driving capability, and improve the autonomous driving safety.

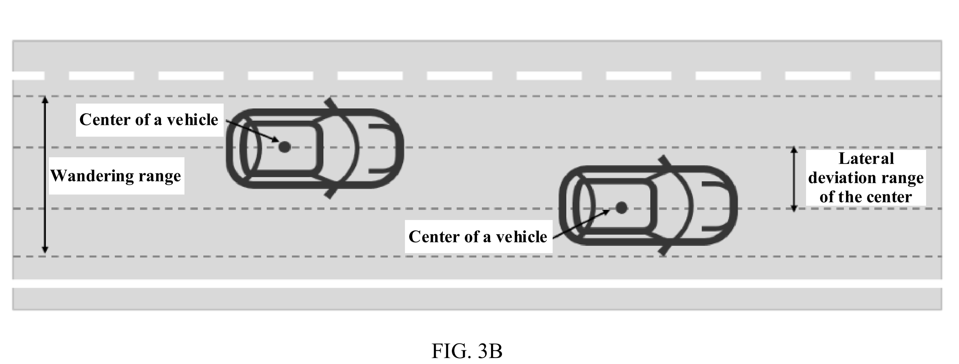

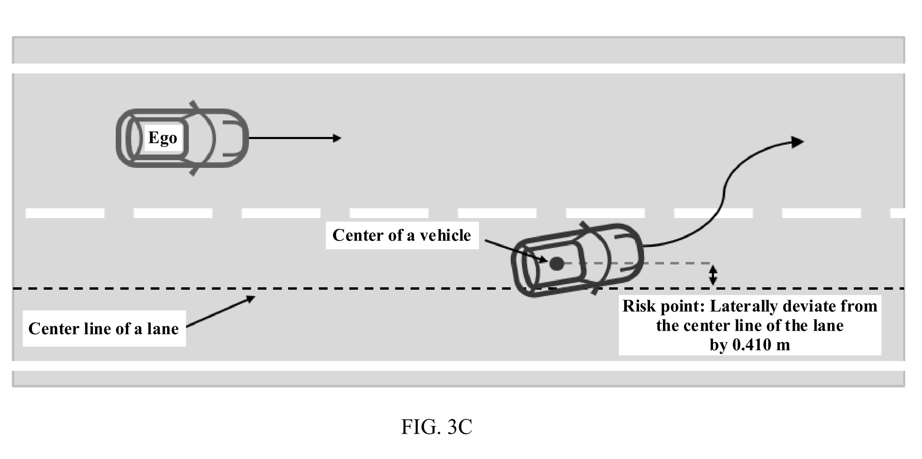

The following describes, with reference to FIG. 3A, FIG. 3B, and FIG. 3C, determining of a risk point in an adjacent-vehicle cut-in scenario.

FIG. 3A, FIG. 3B, and FIG. 3C are diagrams of a vehicle cut-in scenario according to an embodiment of this application.

FIG. 3A shows a scenario in which a vehicle laterally deviates slightly when performing lane keeping.

FIG. 3B shows a scenario of a two-side lateral deviation range when a vehicle performs lane keeping.

FIG. 3C shows a scenario of a risk point in an adjacent-vehicle cut-in scenario.

Specifically, the adjacent-vehicle cut-in scenario is defined as follows: A surrounding vehicle that is in an adjacent lane of an ego vehicle and that is in a same travelling direction as the ego vehicle changes the lane to the front of a lane of the ego vehicle, and there is no other vehicle between the surrounding vehicle and the ego vehicle when the lane change is completed. A time point at which an adjacent vehicle starts lane change means that a risk in front of the travelling direction of the ego vehicle has occurred for the ego vehicle. Therefore, the time point at which the adjacent vehicle actually starts lane change is a risk point in the scenario.

A time point at which a vehicle starts to change a lane may be determined by using a lateral offset of the vehicle relative to a center line of the lane. Lane change of the vehicle can be determined only when the lateral offset reaches a specific value. This is because when the vehicle performs a lane keeping behavior in the lane of the vehicle, the vehicle unavoidably deviates slightly from the center line of the lane, and slightly "wanders" in the lane, as shown in FIG. 3A. Therefore, only a lateral deviation range of a center of the vehicle when the vehicle performs a normal lane keeping behavior needs to be collected. As shown in FIG. 3B, 1/2 of the range may be considered as a boundary point at which the vehicle needs to perform lane change instead of lane keeping, namely, the risk point in the foregoing adjacent-vehicle cut-in scenario. Optionally, when the lateral deviation range is 0.820 m, it is obtained that the risk point in the adjacent-vehicle cut-in scenario is that the adjacent vehicle deviates from the center line of the lane by 0.410 m. As shown in FIG. 3C, when the adjacent vehicle deviates from the center line of the lane by more than 0.410 m, it may be considered that the risk point in the scenario occurs.

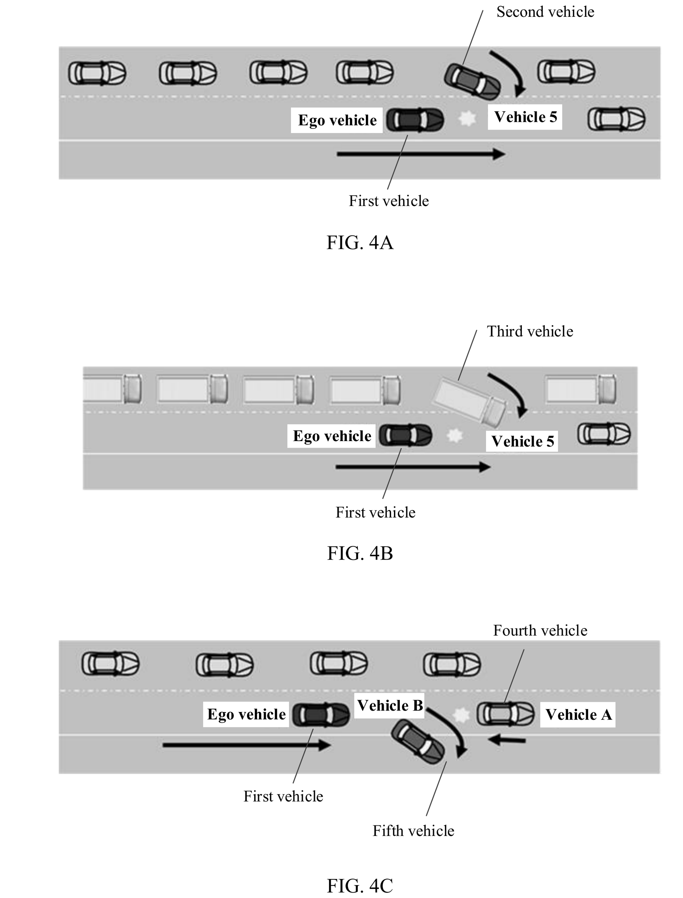

In a possible embodiment, determining of the first risk point (the actual risk point) and/or the second risk point (the potential risk point) in the reaction model building method in FIG. 2 may be separately described based on the method for determining the risk point in the adjacent-vehicle cut-in scenario in FIG. 3A to FIG. 3C and with reference to driving scenarios shown in FIG. 4A, FIG. 4B, and FIG. 4C.

FIG. 4A is a diagram of a small-vehicle cut-in scenario according to an embodiment of this application.

As shown in FIG. 4A, in a scenario in which a second vehicle cuts in front of a first vehicle (an ego vehicle) without turning on a turn signal, and a vehicle type of the second vehicle is not greater than a vehicle type of the first vehicle, if an offset between the second vehicle and a center line of a lane in which the second vehicle is located is greater than a first threshold, this is determined as the first risk point.

The first threshold is not a fixed value, and may be adjusted based on different application scenarios. This is not limited in embodiments of this application. Optionally, the first threshold may be 0.410 m determined in FIG. 3C.

That the vehicle type of the second vehicle is not greater than the vehicle type of the first vehicle may be understood as that the second vehicle is a small vehicle. The current method for determining the first risk point is applicable to the small-vehicle cut-in scenario.

It may be understood that in this embodiment of this application, in the scenario in which the second vehicle cuts in front of the first vehicle without turning on the turn signal, the second vehicle does not turn on the turn signal, is not a large vehicle, and does not have the braking action. Therefore, it may be considered that there is no potential risk point in the scenario, to be specific, no potential risk is posed to the driving safety of the first vehicle. In this case, the first risk point may be a moment at which the second vehicle shows a clear cut-in intention.

Correspondingly, the reaction model built based on the first information indicates a non-defensive emergency action behavior of the first vehicle after the first risk point occurs in the scenario.

FIG. 4B is a diagram of a large-vehicle cut-in scenario according to an embodiment of this application.

As shown in FIG. 4B, in a scenario in which a third vehicle cuts in front of a first vehicle without turning on a turn signal, if a vehicle type of the third vehicle is greater than a vehicle type of the first vehicle, the third vehicle may be determined as a second risk point before the third vehicle performs a cut-in behavior, or if the third vehicle laterally deviates, the third vehicle is determined as the third risk point.

That the vehicle type of the third vehicle is greater than the vehicle type of the first vehicle may be understood as that the third vehicle is a large vehicle. The current method for determining the second risk point is applicable to the large-vehicle cut-in scenario.

It may be understood that in this embodiment of this application, in the scenario in which the third vehicle cuts in front of the first vehicle without turning on the turn signal, although the third vehicle does not turn on the turn signal, the third vehicle is a large vehicle adjacent to the first vehicle. Therefore, it may be considered that there is a potential risk point in the scenario, to be specific, a potential risk is posed to the driving safety of the first vehicle. In this case, the second risk point may be determined as a large vehicle (namely, the third vehicle) adjacent to the first vehicle. Because the third vehicle is the large vehicle and has a clear cut-in action, lateral deviation of the third vehicle may be determined as the third risk point, namely, the actual risk point that may be triggered by the second risk point.

It may be understood that the second risk point (a large vehicle adjacent to the first vehicle) may be used to provide an early warning for a reasonably foreseeable actual risk point (where the third vehicle laterally deviates) in the first time period after the current moment.

Correspondingly, the reaction model built based on the first information indicates a defensive emergency action behavior of the first vehicle after the second risk point occurs in the scenario.

FIG. 4C is a diagram of a preceding-vehicle cut-out scenario according to an embodiment of this application.

As shown in FIG. 4C, in a scenario in which a first vehicle meets a fourth vehicle that is in front of a fifth vehicle when the fifth vehicle in front of the first vehicle cuts out of a current lane, if a lateral vehicle body that is of the fourth vehicle and that appears in a field of view of the first vehicle is greater than a second threshold, this is determined as the first risk point.

The second threshold is not a fixed value, and may be adjusted based on different application scenarios. This is not limited in embodiments of this application.

It may be understood that in this embodiment of this application, in the scenario in which the fifth vehicle cuts out of the current lane and the first vehicle meets the fourth vehicle that is in front of the fifth vehicle, there is no potential risk point, to be specific, no potential risk is posed to the driving safety of the first vehicle. In this case, the first risk point may be a moment at which the lateral vehicle body that is of the fourth vehicle and that appears in the field of view of the first vehicle is greater than the second threshold.

Correspondingly, the reaction model built based on the first information indicates a non-defensive emergency action behavior of the first vehicle after the first risk point occurs in the scenario.

It should be understood that FIG. 4A, FIG. 4B, and FIG. 4C are merely used as examples for description of determining the first risk point (the actual risk point) and/or the second risk point (the potential risk point) in three possible driving scenarios, and should not constitute a limitation on embodiments of this application. All embodiments obtained based on the foregoing driving scenarios and a supplement or an appropriate variation of determining the first risk point (the actual risk point) and/or the second risk point (the potential risk point) shall fall within the protection scope of embodiments of this application.

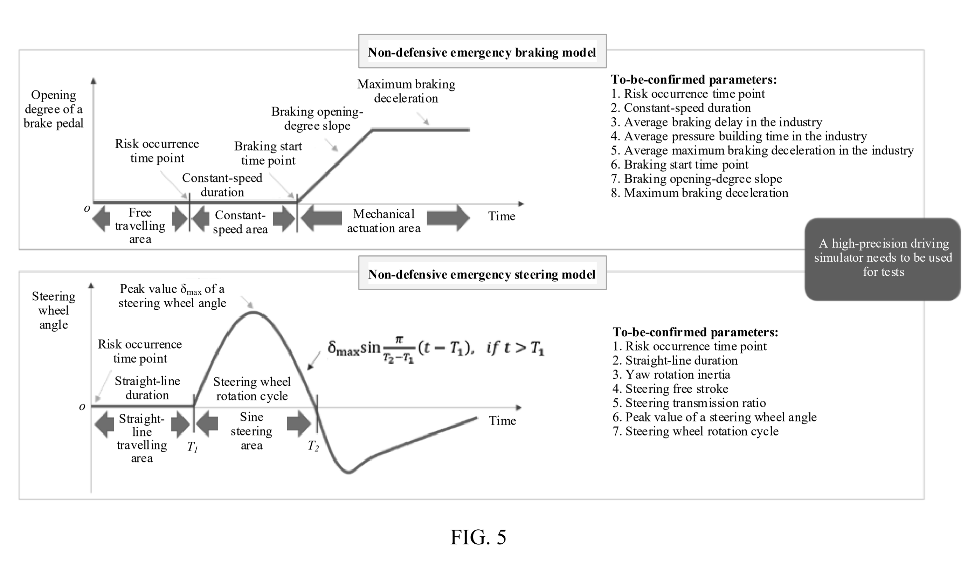

In a possible embodiment, with reference to a braking model and a steering model of a driver shown in FIG. 5, step S202 of "building the reaction model based on the first information" in FIG. 2 may be further described in different cases. Specific cases are as follows:

Case 1:

When the first information includes the first risk point, second information is determined, and a first reaction model is built based on the first information and the second information.

When the first information includes the first risk point, it indicates that the actual risk point occurs on the road on which the first vehicle is located at the current moment. In this case, the determined second information includes information about a first interval in which the first vehicle travels at a constant speed and information about a second interval in which vehicle braking is performed.

Correspondingly, the first reaction model built based on the first information and the second information indicates a non-defensive emergency braking behavior of the first vehicle after the first risk point occurs in the scenario. To be specific, after the first risk point occurs, and after the first vehicle continuously travels at a constant speed in the first interval, the first vehicle starts to brake in the second interval, and reaches a maximum braking deceleration at a specific slope, to maintain deceleration until stop.

It may be understood that, when the first information includes the first risk point, the second information for building the first reaction model may include but is not limited to duration in which the first vehicle travels at a constant speed in the first interval, a start time point at which the first vehicle brakes in the second interval, a braking rate of the first vehicle, and a maximum braking deceleration of the first vehicle.

The first reaction model built based on the second information in this embodiment of this application can more accurately indicate the non-defensive emergency braking behavior of the vehicle after the actual risk point occurs.

For details, refer to FIG. 5. FIG. 5 is a diagram of the braking model and the steering model of the driver according to an embodiment of this application.

As shown in FIG. 5, a non-defensive emergency braking model in FIG. 5 may be divided into three areas: a free travelling area, a constant-speed area, and a mechanical braking area.

In the free travelling area, the driver drives based on a driving requirement. After the first risk point occurs, a vehicle enters the constant-speed travelling area (namely, the first interval), and the driver performs risk evaluation, decision-making reaction, and foot pedal migration, and starts to step down a brake pedal. In the mechanical braking area (namely, the second interval), the vehicle generates clear braking effect. After braking efficiency is quickly improved, a maximum braking deceleration is reached, and the vehicle maintains deceleration until stop.

It can be learned that, in the non-defensive emergency braking model in FIG. 5, parameters to be confirmed for building the non-defensive emergency braking model may include but are not limited to: a risk occurrence time point, constant-speed duration, an average braking delay in the industry, an average pressure building time in the industry, an average maximum braking deceleration in the industry, a braking start time point, a braking opening-degree slope, and a maximum braking deceleration.

The first reaction model built in this embodiment of this application can cover a driving scenario in which an actual risk point occurs, optimize definition logic of the actual risk point, and more accurately indicate a non-defensive emergency braking behavior of the vehicle after the actual risk point occurs, to properly evaluate the autonomous driving capability, and improve the autonomous driving safety.

Case 2:

When the first information includes the second risk point, third information is determined, and a second reaction model is built based on the first information and the third information.

When the first information includes the second risk point, it indicates that the potential risk point occurs on the road on which the first vehicle is located at the current moment, and may be used to provide an early warning for the reasonably foreseeable third risk point (namely, the actual risk point) in the first time period after the current moment. In this case, the determined third information includes information about a third interval in which the first vehicle travels at a constant speed and information about a fourth interval in which vehicle braking is performed.

Correspondingly, the second reaction model built based on the first information and the third information indicates a defensive emergency braking behavior of the first vehicle after the second risk point occurs in the scenario. To be specific, after the second risk point occurs and before the third risk point occurs, the first vehicle keeps sliding, that is, travels in a current travelling state. After the third risk point occurs, and after the first vehicle continuously travels at a constant speed in the third interval, the first vehicle starts to brake in the fourth interval, and reaches a maximum braking deceleration at a specific slope, to maintain deceleration until stop.

It may be understood that, when the first information includes the second risk point, the third information for building the second reaction model may include but is not limited to: duration in which the first vehicle travels at a constant speed in the third interval, a start time point at which the first vehicle brakes in the fourth interval, a braking rate of the first vehicle, and a maximum braking deceleration of the first vehicle.

The second reaction model built based on the third information in this embodiment of this application can more accurately indicate the defensive emergency braking behavior of the vehicle after the potential risk point occurs.

Optionally, the second reaction model built in this embodiment is similar to the non-defensive emergency braking model in FIG. 5. A difference between the second reaction model and the non-defensive emergency braking model lies in that the third interval in the second reaction model is different from the constant-speed travelling area (namely, the first interval) in the non-defensive emergency braking model in FIG. 5. Specifically, start time points, end time points, interval lengths, and the like of the intervals may be different, and the intervals of the two are respectively applicable to a defensive braking scenario and a stress braking scenario. The fourth interval in the second reaction model is different from the mechanical braking area (namely, the second interval) in the non-defensive emergency braking model in FIG. 5. Specifically, start time points, end time points, interval lengths, and the like of the intervals may be different, and the intervals of the two are respectively applicable to the defensive braking scenario and the stress braking scenario.

The second reaction model built in this embodiment of this application introduces the concept of potential risk point, and can cover a driving scenario in which a potential risk point occurs, optimize definition logic of the actual risk point, and more accurately indicate a defensive emergency braking behavior of the vehicle after the potential risk point occurs, to properly evaluate the autonomous driving capability, and improve the autonomous driving safety.

Case 3:

When the first information includes the first risk point, fourth information is determined, and a third reaction model is built based on the first information and the fourth information.

When the first information includes the first risk point, it indicates that the actual risk point occurs on the road on which the first vehicle is located at the current moment. In this case, the determined fourth information includes information about a fifth interval in which the first vehicle travels in a straight line and information about a sixth interval in which vehicle steering is performed.

Correspondingly, the third reaction model built based on the first information and the fourth information indicates a non-defensive emergency steering behavior of the first vehicle after the first risk point occurs in the scenario. To be specific, after the first risk point occurs, and after the first vehicle continuously travels in a straight line in the fifth interval, the first vehicle starts to steer in the sixth interval, reaches a maximum steering angle in a sine form, returns the steering angle to center, and then continues to travel in a straight line in a direction existing after the steering angle is returned to center.

It may be understood that, when the first information includes the first risk point, the fourth information for building the third reaction model may include but is not limited to duration in which the first vehicle travels in a straight line in the fifth interval, a peak value of a steering wheel angle at which the first vehicle steers in the sixth interval, and a steering wheel rotation cycle of the first vehicle.

The third reaction model built based on the fourth information in this embodiment of this application can more accurately indicate the non-defensive emergency steering behavior of the vehicle after the actual risk point occurs.

For details, refer to FIG. 5. FIG. 5 is a diagram of the braking model and the steering model of the driver according to an embodiment of this application.

As shown in FIG. 5, a non-defensive emergency steering model in FIG. 5 may be divided into two areas: a straight-line travelling area and a sine steering area.

In the straight-line travelling area, the driver drives based on a driving requirement. After the first risk point occurs, a vehicle is still in a straight-line travelling state (namely, the fifth interval), the driver performs risk evaluation and decision-making reaction, and starts to hold and rotate a steering wheel with hands. The vehicle enters the sine steering area (namely, the sixth interval). In the sine steering area, the steering wheel is rotated in a sine manner. For example, the sine manner of rotation may be represented as follows:

$$\delta_{max} \sin \frac{\pi}{T_2 - T_1} (t - T_1), (t > T_1)$$

$\delta_{max}$ indicates a peak value of a steering wheel angle, $T_2 - T_1$ indicates a steering wheel rotation cycle (namely, a sine steering area), and t is a moment of rotation in the sine manner.

It can be seen that, in the non-defensive emergency steering model in FIG. 5, parameters to be confirmed for building the non-defensive emergency steering model may include but are not limited to: a risk occurrence time point, a straight-line duration, a yaw rotation inertia, a steering free stroke, a steering transmission ratio, a peak value of a steering wheel angle, and a steering wheel rotation cycle.

The third reaction model built in this embodiment of this application can cover a driving scenario in which an actual risk point occurs, optimize definition logic of the actual risk point, and more accurately indicate a non-defensive emergency steering behavior of the vehicle after the actual risk point occurs, to properly evaluate the autonomous driving capability, and improve the autonomous driving safety.

Case 4:

When the first information includes the second risk point, fifth information is determined, and a fourth reaction model is built based on the first information and the fifth information.

When the first information includes the second risk point, it indicates that the potential risk point occurs on the road on which the first vehicle is located at the current moment, and may be used to provide an early warning for the reasonably foreseeable third risk point (namely, the actual risk point) in the first time period after the current moment. In this case, the determined fifth information includes information about a seventh interval in which the first vehicle travels in a straight line and information about an eighth interval in which vehicle steering is performed.

Correspondingly, the fourth reaction model built based on the first information and the fifth information indicates a defensive emergency steering behavior of the first vehicle after the second risk point occurs in the scenario. To be specific, after the second risk point occurs and before the third risk point occurs, the first vehicle keeps sliding, that is, travels in a current travelling state. After the third risk point occurs, and after the first vehicle continuously travels in a straight line in the seventh interval, the first vehicle starts to steer in the eighth interval, reaches a maximum steering angle in a sine form, returns the steering angle to center, and then continues to travel in a straight line in a direction existing after the steering angle is returned to center.

It may be understood that, when the first information includes the second risk point, the fifth information for building the fourth reaction model may include but is not limited to: duration in which the first vehicle travels in a straight line in the seventh interval, a peak value of a steering wheel angle at which the first vehicle steers in the eighth interval, and a steering wheel rotation cycle of the first vehicle.

The fourth reaction model built based on the fifth information in this embodiment of this application can more accurately indicate the non-defensive emergency steering behavior of the vehicle after the potential risk point occurs.

Optionally, the fourth reaction model built in this embodiment is similar to the non-defensive emergency steering model in FIG. 5. A difference between the fourth reaction model and the non-defensive emergency steering model lies in that the seventh interval in the fourth reaction model is different from the straight-line travelling state (namely, the fifth interval) after the first risk point in the non-defensive emergency steering model in FIG. 5 occurs. Specifically, start time points, end time points, interval lengths, and the like of the intervals may be different, and the intervals of the two are respectively applicable to a defensive steering scenario and a stress steering scenario. The eighth interval in the fourth reaction model is different from the sine steering area (namely, the sixth interval) in the non-defensive emergency steering model in FIG. 5. Specifically, start time points, end time points, interval lengths, and the like of the intervals may be different, and the intervals of the two are respectively applicable to the defensive steering scenario and the stress steering scenario.

The fourth reaction model built in this embodiment of this application introduces the concept of potential risk point, and can cover a driving scenario in which a potential risk point occurs, optimize definition logic of the actual risk point, and more accurately indicate a defensive emergency steering behavior of the vehicle after the potential risk point occurs, to properly evaluate the autonomous driving capability, and improve the autonomous driving safety.

Based on the two actions and two phases of the standard operations of the average human driver in the reaction model in FIG. 1, and the reaction model building method in FIG. 2, embodiments of this application correspondingly provide a parameter calibration method for the reaction model.

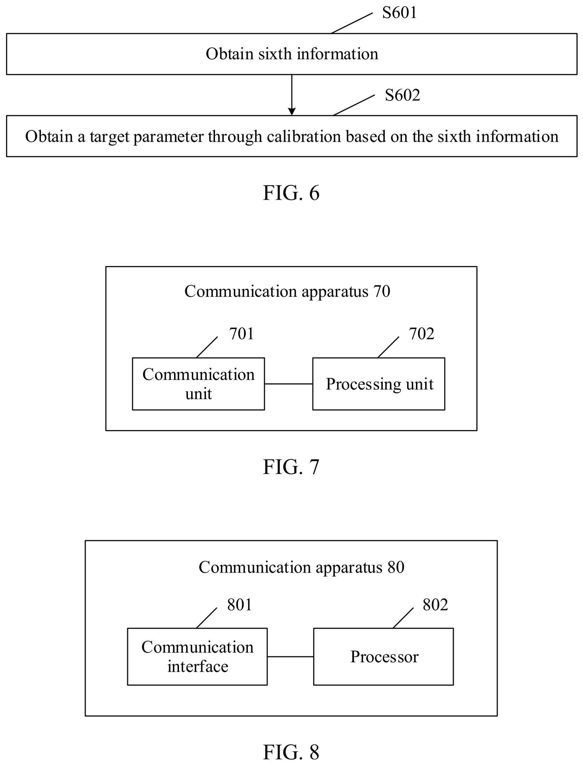

FIG. 6 is a schematic flowchart of a parameter calibration method for a reaction model according to an embodiment of this application. It may be understood that the steps in this embodiment of this application may be considered as a proper variation or supplement to the embodiment in FIG. 2. Alternatively, it may be understood that the parameter calibration method for the reaction model in this embodiment of this application may be considered as an embodiment that can be independently performed. This is not limited in this application. The parameter calibration method for the reaction model in this embodiment of this application is applied to the field of intelligent driving technologies, for example, evaluation of the autonomous driving capability. The parameter calibration method for the reaction model is specifically applied to the first vehicle, and includes but is not limited to the following steps:

S601: Obtain sixth information.
S602: Obtain a target parameter through calibration based on the sixth information.

It may be understood that, in embodiments of this application, a communication apparatus configured to obtain the sixth information and obtain the target parameter through calibration based on the sixth information may be a device equipped with a processor/chip that can be configured to execute computer-executable instructions, or may be a processor/chip that can be configured to execute computer-executable instructions. This is not limited in embodiments of this application. Optionally, the communication apparatus may be a processor/chip in an intelligent vehicle, or may be a simulated driving cockpit and a motion platform, and is configured to perform the parameter calibration method for the reaction model in the embodiments of this application, to cover more dangerous driving scenarios, and more accurately indicate an action behavior of the vehicle after a risk point occurs, so as to properly evaluate an autonomous driving capability, and improve autonomous driving safety.

The sixth information includes parameter information output by the reaction model.

The parameter information indicates the driving behavior of the average human driver corresponding to the first vehicle. The reaction model is built based on the first information, and indicates the action behavior of the first vehicle after the first risk point or the second risk point occurs.

Specifically, the first information includes information about a first risk point or a second risk point.

The first risk point is the actual risk point that occurs on the road on which the first vehicle is located at the first moment, and the actual risk point may be understood as an event that threatens driving safety of the vehicle and that occurs at the first moment.

The second risk point is the potential risk point that occurs on the road on which the first vehicle is located at the first moment and that triggers the third risk point. The third risk point is the actual risk point that occurs on the road on which the first vehicle is located in the first time period after the first moment. A potential risk point may be understood as an event that occurs at the first moment and that may affect the driving safety of the vehicle but does not pose an actual threat to the driving safety of the vehicle. A subsequent event triggered by the potential risk point poses a threat to the driving safety of the vehicle.

It may be understood that, the second risk point may be used to provide an early warning for a reasonably foreseeable actual risk point in the first time period after the first moment. The first time period is not a fixed value, and may be adjusted based on different application scenarios.

Optionally, in this embodiment of this application, the reaction model used to output the parameter information may be obtained by using the reaction model building method shown in FIG. 2. For this, refer to the description of the reaction model building method shown in FIG. 2. Details are not described again in this embodiment of this application.

In this embodiment of this application, the target parameter obtained through calibration based on the sixth information is used to assess autonomous driving performance of the first vehicle.

In this embodiment of this application, the target parameter obtained through calibration based on the parameter information output by the reaction model is used to assess the autonomous driving performance of the first vehicle.

Because a concept of potential risk point is introduced into the reaction model, more dangerous driving scenarios can be covered, definition logic of the actual risk point can be optimized, and an action behavior of the vehicle after the risk point occurs is more accurately indicated. Therefore, based on the target parameter obtained through calibration based on the parameter information output by the reaction model, an autonomous driving capability can be properly evaluated, autonomous driving safety can be improved, and an autonomous driving accident can be evaluated after the accident occurs.

It can be learned from the reaction model building method in FIG. 2 that reaction models (braking models/steering models) built in different driving scenarios (actual risk points/potential risk points) are different. For example:

In Case 1 of the reaction model building method in FIG. 2, the first reaction model built based on the first information and the second information indicates a non-defensive emergency braking behavior of the first vehicle after the first risk point occurs in a scenario in which the first risk point (an actual risk point) exists.

In Case 2 of the reaction model building method in FIG. 2, the second reaction model built based on the first information and the third information indicates a defensive emergency braking behavior of the first vehicle after the second risk point occurs in a scenario in which the second risk point (a potential risk point) exists.

In Case 3 of the reaction model building method in FIG. 2, the third reaction model built based on the first information and the fourth information indicates a non-defensive emergency steering behavior of the first vehicle after the first risk point occurs in a scenario in which the first risk point (an actual risk point) exists.

In Case 4 of the reaction model building method in FIG. 2, the fourth reaction model built based on the first information and the fifth information indicates a defensive emergency turn behavior of the first vehicle after the second risk point occurs in a scenario in which the second risk point (a potential risk point) exists.

In a possible embodiment, with reference to the reaction models (the first reaction model, the second reaction model, the third reaction model, and the fourth reaction model) built by using the model building method in FIG. 2, step S602 of "obtaining the target parameter through calibration based on the sixth information" in FIG. 6 may be further described in different cases. A specific case is as follows:

Case 1:

When the parameter information included in the sixth information is from the first reaction model or the second reaction model, the target parameter obtained through calibration based on the sixth information includes but is not limited to any one or more of the following:

a maximum braking deceleration of the first vehicle, a braking efficiency improvement time of the first vehicle, a braking efficiency improvement rate of first vehicle, and a decision reaction time of the average human driver corresponding to first vehicle.

Further, the following separately describes a calibration method for each target parameter.

(1) Maximum braking deceleration of the first vehicle:

First, a braking deceleration of an ego vehicle of a driver in the parameter information output by the reaction model is smoothed and filtered, and a few singular data points caused by collision and system offset are removed. Then, a specific quantity of frames (for example, 500 frames) of slice data before and after a risk generation point is selected for analysis, and an average of N frames (for example, 10 frames) of data, in the slice data, whose braking decelerations are large after the first risk point or the second risk point occurs is selected as a maximum braking deceleration, so that a braking behavior of an average human driver corresponding to the first vehicle after the first risk point or the second risk point occurs can be more accurately indicated.

(2) Braking efficiency improvement time of the first vehicle:

A braking start moment is obtained by calibrating at least two frames of data with small braking decelerations in the parameter information output by the reaction model, and a braking saturation moment is obtained by calibrating at least two frames of data with large braking decelerations in the parameter information output by the reaction model. A difference between the braking saturation moment and the braking start moment is the braking efficiency improvement time of the first vehicle.

It may be understood that the small braking deceleration may mean that a braking deceleration is less than a preset threshold. The preset threshold is not a fixed value, and may be adjusted based on different application scenarios. For example, there may be two frames of data whose braking decelerations are 10% and 15% of the maximum braking deceleration. Similarly, the large braking deceleration may mean that a braking deceleration is greater than a preset threshold. The preset threshold is not a fixed value, and may be adjusted based on different application scenarios. For example, there may be two frames of data whose braking decelerations are 90% and 85% of the maximum braking deceleration.

For example, a moment at which a braking deceleration of a first frame reaches 10% of the maximum braking deceleration is found and is recorded as $T_{10}$, and a moment at which a braking deceleration of a first frame reaches 15% of the maximum braking deceleration is found and is recorded as $T_{15}$. Therefore, an approximate braking start moment $T_0$ may be obtained as follows:

$$T_0 = T_{10} - 2 \times (T_{15} - T_{10})$$

Similarly, a moment at which a braking deceleration of a first frame reaches 90% of the maximum braking deceleration is found and is recorded as $T_{90}$, and a moment at which a braking deceleration of a first frame reaches 85% of the maximum braking deceleration is found and is recorded as $T_{85}$. Therefore, an approximate braking saturation moment $T_{100}$ may be obtained as follows:

$$T_{100} = T_{90} + 2 \times (T_{90} - T_{85})$$

Finally, $T_0$ is subtracted from $T_{100}$, to obtain the braking efficiency improvement time of the first vehicle.

In this embodiment of this application, because a brake pedal usually generates slight disturbance during actual travelling, a moment at which the braking deceleration of the first frame is not zero cannot be directly found in statistical code. Otherwise, the moment is inaccurate due to the disturbance. To resolve this problem, by using an approximation method, it is assumed that a braking efficiency improvement rate at a braking start time is the same as that at a time when the braking is about to be saturated. The braking saturation moment is reversely deduced by using a moment at which the braking deceleration is large, and the braking start moment is reversely deduced by using a moment at which the braking deceleration is small, so that a robust anti-interference braking efficiency improvement time can be obtained, to more accurately indicate a braking behavior of the average human driver corresponding to the first vehicle after the first risk point or the second risk point occurs.

(3) Braking efficiency improvement rate of the first vehicle:

The braking efficiency improvement rate of the first vehicle is obtained by calibrating the at least one frame of data with the small braking deceleration and the at least one frame of data with the large braking deceleration in the parameter information output by the reaction model.

It may be understood that the small braking deceleration may mean that a braking deceleration is less than a preset threshold. The preset threshold is not a fixed value, and may be adjusted based on different application scenarios. For example, there may be at least one frame of data whose braking deceleration is 10% of the maximum braking deceleration. Similarly, the large braking deceleration may mean that a braking deceleration is greater than a preset threshold. The preset threshold is not a fixed value, and may be adjusted based on different application scenarios. For example, there may be at least one frame of data whose braking deceleration is 90% of the maximum braking deceleration.

For example, if the maximum braking deceleration is $d_{max}$, the braking efficiency improvement rate of the first vehicle is calculated as follows:

$$j = \frac{0.9d_{max} - 0.1d_{max}}{T_{90} - T_{10}}$$

In this embodiment of this application, a braking curve in a braking process is not a strict straight line, and the braking deceleration increases slowly when the braking starts and is about to be saturated. Therefore, a braking deceleration change status in a middle section of a whole braking process of the first vehicle is selected, so that a more accurate braking efficiency improvement rate of the first vehicle can be obtained, to more accurately indicate a braking behavior of the average human driver corresponding to the first vehicle after the first risk point or the second risk point occurs.

(4) Decision reaction time of the average human driver corresponding to the first vehicle:

The braking start moment is obtained by calibrating the at least two frames of data with the small braking decelerations in the parameter information output by the reaction model, and the difference between the braking start moment and the actual risk point occurrence moment is used as the decision reaction time of the average human driver corresponding to the first vehicle, to more accurately indicate a braking behavior of the average human driver corresponding to the first vehicle after the first risk point or the second risk point occurs.

It may be understood that the small braking deceleration may mean that a braking deceleration is less than a preset threshold. The preset threshold is not a fixed value, and may be adjusted based on different application scenarios. For example, there may be at least two frames of data whose braking decelerations are 10% and 15% of the maximum braking deceleration.

Case 2:

When the parameter information included in the sixth information is from the third reaction model or the fourth reaction model, the target parameter obtained through calibration based on the sixth information includes but is not limited to any one or more of the following:
a maximum steering wheel angle of the first vehicle, steering wheel return-to-center duration of the first vehicle, and a decision reaction time of the average human driver corresponding to the first vehicle.
Further, the following separately describes a calibration method for each target parameter.

(1) Maximum steering wheel angle of the first vehicle:
First, steering wheel angle data of an ego vehicle of a driver in the parameter information output by the reaction model is smoothed and filtered, and a few singular data points caused by collision and system offset are removed. Then, a specific quantity of frames (for example, 500 frames) of slice data before and after a risk generation point is selected for analysis, and an average of M frames (for example, 10 frames) of data, in the slice data, whose steering wheel angles are large after the first risk point or the second risk point occurs is selected as a maximum steering wheel angle, so that a steering behavior of an average human driver corresponding to the first vehicle after the first risk point or the second risk point occurs can be more accurately indicated.
(2) Steering wheel return-to-center duration of the first vehicle:
The steering start moment is obtained by calibrating the at least two frames of data with the small steering wheel angles in the parameter information output by the reaction model, and the first return-to-center moment is obtained by calibrating the at least two frames of data with the large steering wheel angles in the parameter information output by the reaction model. The difference between the first return-to-center moment and the steering start moment is the steering wheel return-to-center duration of the first vehicle.

It may be understood that the small steering wheel angle may mean that a steering wheel angle is less than a preset threshold. The preset threshold is not a fixed value, and may be adjusted based on different application scenarios. For example, there may be two frames of data whose steering wheel angles are 20% and 15% of the maximum steering wheel angle. Similarly, the large steering wheel angle may mean that a steering wheel angle is greater than a preset threshold. The preset threshold is not a fixed value, and may be adjusted based on different application scenarios. For example, there may be two frames of data whose steering wheel angles are 80% and 85% of the maximum steering wheel angle.
For example, a moment at which a steering wheel angle of a first frame reaches 20% of the maximum steering wheel angle is found and is recorded as $t_{20}$, and a moment at which a steering wheel angle of a first frame reaches 15% of the maximum steering wheel angle is found and is recorded as $t_{15}$. Therefore, an approximate steering start moment $t_1$ may be obtained as follows:

$$t_1 = t_{15} - 3 \times (t_{20} - t_{15})$$

Similarly, a moment at which a steering wheel angle of a first frame reaches 80% of the maximum steering wheel angle is found and is recorded as $t_{80}$, and a moment at which a steering wheel angle of a first frame reaches 85% of the maximum steering wheel angle is found and is recorded as $t_{85}$. Therefore, an approximate first steering return-to-center moment $t_2$ may be obtained as follows:

$$t_2 = t_{85} + 3 \times (t_{85} - t_{80})$$

Finally, $t_1$ is subtracted from $t_2$, to obtain the steering wheel return-to-center duration of the first vehicle.
In this embodiment of this application, because the steering wheel usually generates slight disturbance during actual travelling, a moment at which the steering wheel angle of the first frame is not zero cannot be directly found in statistical code. Otherwise, the moment is inaccurate due to the disturbance. To resolve this problem, by using an approximation method, it is assumed that a steering angle increase rate at a steering start time is the same as that at a time when the first steering is about to return to center. The first steering return-to-center moment is reversely deduced by using a moment at which the steering angle is large, and the steering start moment is reversely deduced by using a moment at which the steering angle is small, so that a robust anti-interference steering wheel return-to-center duration can be obtained, to more accurately indicate a steering behavior of the average human driver corresponding to the first vehicle after the first risk point or the second risk point occurs.

(3) Decision reaction time of the average human driver corresponding to the first vehicle:

The steering start moment is obtained by calibrating the at least two frames of data with the small steering wheel angles in the parameter information, and the difference between the steering start moment and the actual risk point occurrence moment is used as the decision reaction time of the average human driver corresponding to the first vehicle, to more accurately indicate a steering behavior of the average human driver corresponding to the first vehicle after the first risk point or the second risk point occurs.

It may be understood that the small steering wheel angle may mean that a steering wheel angle is less than a preset threshold. The preset threshold is not a fixed value, and may be adjusted based on different application scenarios. For example, there may be at least two frames of data whose steering wheel angles are 20% and 15% of the maximum steering wheel angle.

In this embodiment of this application, the target parameter obtained through calibration based on the parameter information output by the reaction model is used to assess the autonomous driving performance of the first vehicle. Because a concept of potential risk point is introduced into the reaction model, more dangerous driving scenarios can be covered, definition logic of the actual risk point can be optimized, and an action behavior of the vehicle after the risk point occurs is more accurately indicated. Therefore, based on the target parameter obtained through calibration based on the parameter information output by the reaction model, an autonomous driving capability can be properly evaluated, autonomous driving safety can be improved, and an autonomous driving accident can be evaluated after the accident occurs.

In addition, with reference to the reaction model building method shown in FIG. 2 and the calibration method for the reaction model shown in FIG. 6, a test may be designed for each driving scenario shown in FIG. 4A, FIG. 4B, and FIG. 4C based on a simulated driving cockpit and a motion platform, and a parameter of a reaction model corresponding to the average human driver in each driving scenario is calibrated according to the calibration method for the reaction model shown in FIG. 6.

Specifically, for the scenario in which a small vehicle cuts in without turning on the turn sign shown in FIG. 4A, by designing a series of tests, parameter results of a reaction model corresponding to the average human driver in the scenario may be obtained, as shown in Table 1 and Table 2.

Table 1

| Decision reaction time (s) | Maximum braking deceleration (m/s$^2$) | Braking efficiency improvement time (s) |
| --- | --- | --- |
| 1.19 | -9.34 | 0.53 |

Table 2

| Decision reaction time (s) | Maximum steering wheel angle (°) | Steering wheel return-to-center time (s) |
| --- | --- | --- |
| 1.19 | 71.85 | 1.16 |

Table 1 shows parameter results of a braking model corresponding to the average human driver after an actual risk point occurs, and Table 2 shows parameter results of a steering model corresponding to the average human driver after an actual risk point occurs.

Specifically, for the scenario in which a large vehicle cuts in without turning on the turn sign shown in FIG. 4B, by designing a series of tests, parameter results of a reaction model corresponding to the average human driver in the scenario may be obtained, as shown in Table 3 and Table 4.

Table 3

| Decision reaction time (s) | Maximum braking deceleration (m/s$^2$) | Braking efficiency improvement time (s) |
| --- | --- | --- |
| 0.59 | -9.69 | 0.47 |

Table 4

| Decision reaction time (s) | Maximum steering wheel angle (°) | Steering wheel return-to-center time (s) |
| --- | --- | --- |
| 0.56 | 59.90 | 1.55 |

Table 3 shows parameter results of a braking model corresponding to the average human driver after a potential risk point occurs, and Table 4 shows parameter results of a steering model corresponding to the average human driver after a potential risk point occurs.

Specifically, for the preceding-vehicle cut-out scenario shown in FIG. 4C, by designing a series of tests, parameter results of a reaction model corresponding to the average human driver in the scenario may be obtained, as shown in Table 5 and Table 6.

Table 5

| Decision reaction time (s) | Maximum braking deceleration (m/s$^2$) | Braking efficiency improvement time (s) |
| --- | --- | --- |
| 1.25 | -8.66 | 0.79 |

Table 6

| Decision reaction time (s) | Maximum steering wheel angle (°) | Steering wheel return-to-center time (s) |
| --- | --- | --- |
| 0.95 | 36.93 | 1.20 |

Table 5 shows parameter results of a braking model corresponding to the average human driver after an actual risk point occurs, and Table 6 shows parameter results of a steering model corresponding to the average human driver after an actual risk point occurs.

It should be understood that Table 1 to Table 6 are merely used as several groups of possible test data to describe effect of the reaction model building method shown in FIG. 2 and the parameter calibration method for the reaction model shown in FIG. 6, and should not constitute a limitation on embodiments of this application. Test data that is obtained based on the foregoing driving scenarios and a supplement or a proper variation of the design tests and that is used to prove corresponding effect of the foregoing methods shall fall within the protection scope of embodiments of this application.

The foregoing details the methods in embodiments of this application. The following provides an apparatus for implementing any one of the methods in embodiments of this application. For example, an apparatus including units (or means) for implementing steps performed by a device in any one of the foregoing methods is provided.

FIG. 7 is a diagram of a structure of a communication apparatus according to an embodiment of this application.

As shown in FIG. 7, a communication apparatus 70 may include a communication unit 701 and a processing unit 702. The communication unit 701 and the processing unit 702 may be software, hardware, or a combination of software and hardware.

The communication unit 701 may implement a sending function and/or a receiving function, and the communication unit 701 may also be described as a transceiver unit. Alternatively, the communication unit 701 may be a unit integrating an obtaining unit and a sending unit. The obtaining unit is configured to implement a receiving function, and the sending unit is configured to implement a sending function. Optionally, the communication unit 701 may be configured to receive information sent by another apparatus, and may be further configured to send information to the another apparatus.

In a possible design, the communication apparatus 70 may correspond to the communication apparatus in the method embodiment shown in FIG. 2. For example, the communication apparatus 70 may be the communication apparatus in the method embodiment shown in FIG. 2, or may be a chip in the communication apparatus. The communication apparatus 70 may include units configured to perform the operations performed by the communication apparatus in the method embodiment shown in FIG. 2. In addition, the units in the communication apparatus 70 are separately configured to implement the operations performed by the communication apparatus in the method embodiment shown in FIG. 2. Description of the units is as follows:

The processing unit 702 is configured to obtain first information, where the first information includes information about a first risk point or a second risk point, the first risk point is an actual risk point that occurs on a road on which a first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment.

The processing unit 702 is further configured to build a reaction model based on the first information. The reaction model indicates an action behavior of the first vehicle after the first risk point or the second risk point occurs.

In a possible implementation, the apparatus further includes:
the communication unit 701, configured to receive the first information.

The processing unit 702 is specifically configured to obtain the first information through the communication unit 701.

For a method performed by the processing unit 702 and the communication unit 701, refer to the method corresponding FIG. 2. Details are not described herein again.

For technical effect of this design and any possible implementation, refer to description of technical effect of the method corresponding to FIG. 2.

In another possible design of the communication apparatus 70 shown in FIG. 7, the communication apparatus 70 may correspond to the communication apparatus in the method embodiment shown in FIG. 6. For example, the communication apparatus 70 may be the communication apparatus in the method embodiment shown in FIG. 6, or may be a chip in the communication apparatus. The communication apparatus 70 may include units configured to perform the operations performed by the communication apparatus in the method embodiment shown in FIG. 6. In addition, the units in the communication apparatus 70 are separately configured to implement the operations performed by the communication apparatus in the method embodiment shown in FIG. 6. Description of the units is as follows:

The processing unit 702 is configured to obtain sixth information, where the sixth information includes parameter information output by a reaction model, and the parameter information indicates a driving behavior of an average human driver corresponding to a first vehicle; the reaction model is built based on first information, the first information includes information about a first risk point or a second risk point, the first risk point is an actual risk point that occurs on a road on which the first vehicle is located at a first moment, the second risk point is a potential risk point that occurs on the road on which the first vehicle is located at the first moment and that triggers a third risk point, and the third risk point is an actual risk point that occurs on the road on which the first vehicle is located in a first time period after the first moment; and the reaction model indicates an action behavior of the first vehicle after the first risk point or the second risk point occurs.

The processing unit 702 is further configured to obtain a target parameter through calibration based on the sixth information, where the target parameter is used to assess autonomous driving performance of the first vehicle.

In a possible implementation, the apparatus further includes:
the communication unit 701, configured to receive the sixth information.

The processing unit 702 is specifically configured to obtain the sixth information through the communication unit 701.

For a method performed by the processing unit 702 and the communication unit 701, refer to the method corresponding FIG. 6. Details are not described herein again.

For technical effect of this design and any possible implementation, refer to description of technical effect of the method corresponding to FIG. 6.

Optionally, in the communication apparatus according to any one of the foregoing designs and any one of the possible implementations,

in an implementation, the communication apparatus is a communication device; when the communication apparatus is the communication device, the communication unit may be a transceiver or an input/output interface, and the processing unit may be at least one processor; optionally, the transceiver may be a transceiver circuit; and optionally, the input/output interface may be an input/output circuit; or
in another implementation, the communication apparatus is a chip (system) or a circuit used in a communication device; and when the communication apparatus is the chip (system) or the circuit used in the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

According to this embodiment of this application, a part or all of the units of the apparatus shown in FIG. 7 may be combined into one or more other units, or one (or more) of the units may be divided into a plurality of smaller functional units. In this way, same operations can be implemented without affecting achievement of technical effect of this embodiment of this application. The foregoing units are obtained through division based on logical functions. During actual application, a function of one unit may be implemented by a plurality of units, or functions of a plurality of units may be implemented by one unit. In another embodiment of this application, an electronic device may alternatively include another unit. During actual application, the functions may be alternatively implemented with assistance of the another unit, and may be implemented by a plurality of units in collaboration.

It should be noted that for implementation of each unit, refer to corresponding description in the method embodiments shown in FIG. 2 and FIG. 6.

In the communication apparatus 70 described in FIG. 7, a concept of potential risk point is introduced, so that more dangerous driving scenarios can be covered, definition logic of the actual risk point can be optimized, and an action behavior of the vehicle after the risk point occurs is more accurately indicated, to properly evaluate an autonomous driving capability, and improve autonomous driving safety.

FIG. 8 is a diagram of a structure of a communication apparatus according to an embodiment of this application.

It should be understood that the communication apparatus 80 shown in FIG. 8 is merely an example. The communication apparatus in this embodiment of this application may further include another component, or include a component with a function similar to that of a component in FIG. 8, or does not necessarily need to include all components in FIG. 8.

The communication apparatus 80 includes a communication interface 801 and at least one processor 802.

The communication interface 801 is configured to receive and send signals, and the at least one processor 802 executes program instructions, to enable the communication apparatus 80 to implement a corresponding procedure of a method performed by a corresponding device in the foregoing method embodiments.

In a possible design, the communication apparatus 80 may correspond to the communication apparatus in the method embodiment shown in FIG. 2. For example, the communication apparatus 80 may be the communication apparatus in the method embodiment shown in FIG. 2, or may be a chip in the communication apparatus. The communication apparatus 80 may include components configured to perform the operations performed by the communication apparatus in the method embodiments. In addition, the components in the communication apparatus 80 are separately configured to implement the operations performed by the communication apparatus in the method embodiments. Details may be described as follows:

The processor 802 is configured to obtain first information, where the first information includes information about a first risk point or a second risk point, the first risk point is an actual risk point that occurs on a road on which a first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment.

The processor 802 is further configured to build a reaction model based on the first information. The reaction model indicates an action behavior of the first vehicle after the first risk point or the second risk point occurs.

In a possible implementation, the apparatus further includes:
the communication interface 801, configured to receive the first information.

The processor 802 is specifically configured to obtain the first information through the communication interface 801.

In another possible design, the communication apparatus 80 may correspond to the communication apparatus in the method embodiment shown in FIG. 6. For example, the communication apparatus 80 may be the communication apparatus in the method embodiment shown in FIG. 6, or may be a chip in the communication apparatus. The communication apparatus 80 may include components configured to perform the operations performed by the communication apparatus in the method embodiments. In addition, the components in the communication apparatus 80 are separately configured to implement the operations performed by the communication apparatus in the method embodiments. Details may be described as follows:

The processor 802 is configured to obtain sixth information, where the sixth information includes parameter information output by a reaction model, and the parameter information indicates a driving behavior of an average human driver corresponding to a first vehicle; the reaction model is built based on first information, the first information includes information about a first risk point or a second risk point, the first risk point is an actual risk point that occurs on a road on which the first vehicle is located at a first moment, the second risk point is a potential risk point that occurs on the road on which the first vehicle is located at the first moment and that triggers a third risk point, and the third risk point is an actual risk point that occurs on the road on which the first vehicle is located in a first time period after the first moment; and the reaction model indicates an action behavior of the first vehicle after the first risk point or the second risk point occurs.

The processor 802 is further configured to obtain a target parameter through calibration based on the sixth information, where the target parameter is used to assess autonomous driving performance of the first vehicle.

In a possible implementation, the apparatus further includes:
the communication interface 801, configured to receive the sixth information.

The processor 802 is specifically configured to obtain the sixth information through the communication interface 801.

In the communication apparatus 80 described in FIG. 8, a concept of potential risk point is introduced, so that more dangerous driving scenarios can be covered, definition logic of the actual risk point can be optimized, and an action behavior of the vehicle after the risk point occurs is more accurately indicated, to properly evaluate an autonomous driving capability, and improve autonomous driving safety.

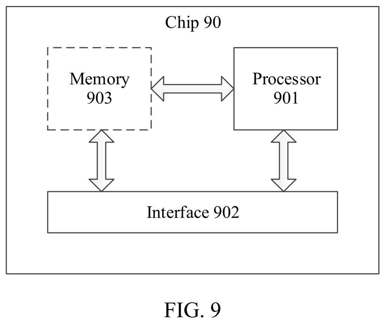

For a case in which the communication apparatus may be a chip or a chip system, refer to a diagram of a structure of a chip shown in FIG. 9.

As shown in FIG. 9, a chip 90 includes a processor 901 and an interface 902. There may be one or more processors 901 and a plurality of interfaces 902. It should be noted that a function corresponding to each of the processor 901 and the interface 902 may be implemented by using a hardware design, may be implemented by using a software design, or may be implemented by combining software and hardware. This is not limited herein.

Optionally, the chip 90 may further include a memory 903, and the memory 903 is configured to store necessary program instructions and data.

In this application, the processor 901 may be configured to: invoke, from the memory 903, a program for implementing the method provided in one or more embodiments of this application in the communication apparatus, and execute instructions included in the program. The interface 902 may be configured to output an execution result of the processor 901. In this application, the interface 902 may be specifically configured to output messages or information of the processor 901.

For the method provided in the one or more embodiments of this application, refer to the embodiments shown in FIG. 2 and FIG. 6. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 2 and FIG. 6 may be implemented.

According to the methods provided in embodiments of this application, an embodiment of this application further provides a computer program product. The computer program product includes a computer program. When the computer program is run on a processor, the methods shown in FIG. 2 and FIG. 6 may be implemented.

An embodiment of this application further provides a vehicle end. The vehicle end includes at least one of the communication apparatus 70, the communication apparatus 80, or the chip 90, and is configured to perform the steps performed by the corresponding device in any one of the embodiments in FIG. 2 and FIG. 6.

An embodiment of this application further provides a processing apparatus, including a processor and an interface. The processor is configured to perform the method in any one of the method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

All or some of the foregoing embodiments may be implemented by using software, hardware, firmware, or any combination thereof. When the software is used to implement the foregoing embodiments, all or some of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The units in the apparatus embodiments totally correspond to electronic devices in the method embodiments, and corresponding modules or units perform corresponding steps. For example, the communication unit (transceiver) performs receiving or sending steps in the method embodiments, and steps other than the sending and receiving steps may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application may be performed.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes various media that can store program code, such as a USB flash drive, a removable hard disk, a read-only memory ROM, a random access memory RAM, a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application.

**Claims**

1. A reaction model building method, applied to a first vehicle, and comprising:

   obtaining first information, wherein the first information comprises information about a first risk point or a second risk point, the first risk point is an actual risk point that occurs on a road on which the first vehicle is located at a current moment, the second risk point is a potential risk point that occurs on the road on which the first vehicle is located at the current moment and that triggers a third risk point, and the third risk point is an actual risk point that occurs on the road on which the first vehicle is located in a first time period after the current moment; and
   building a reaction model based on the first information, wherein the reaction model indicates an action behavior of the first vehicle after the first risk point or the second risk point occurs.

2. The method according to claim 1, wherein the second risk point comprises any one or more of the following:
   a road section with a speed reduction sign, a road section with an attention sign, a road section with a static blind zone, a vehicle in an adjacent lane having a braking action, an adjacent vehicle being a large vehicle, or a warning signal of an adjacent vehicle.

3. The method according to claim 1 or 2, wherein the action behavior comprises at least one of a vehicle braking behavior or a vehicle steering behavior.

4. The method according to any one of claims 1 to 3, wherein the first risk point is that an offset between a second vehicle and a center line of a lane in which the second vehicle is located is greater than a first threshold, the second vehicle is a vehicle that cuts in front of the first vehicle without turning on a turn signal, and a vehicle type of the second vehicle is not greater than a vehicle type of the first vehicle.

5. The method according to any one of claims 1 to 3, wherein the second risk point is that a vehicle type of a third vehicle is greater than a vehicle type of the first vehicle, the third risk point is that the third vehicle laterally deviates, the third vehicle is adjacent to the first vehicle, and the third vehicle is a vehicle that cuts in front of the first vehicle without turning on a turn signal.

6. The method according to any one of claims 1 to 3, wherein the first risk point is that a lateral vehicle body that is of a fourth vehicle and that appears in a field of view of the first vehicle is greater than a second threshold, the fourth vehicle, the first vehicle, and a fifth vehicle are located in a same lane, the fourth vehicle is located in front of the fifth vehicle, the fifth vehicle is located in front of the first vehicle, and the fifth vehicle is a vehicle that is cut out of the current lane.

7. The method according to any one of claims 1 to 6, wherein the building the reaction model based on the first information comprises:

   when the first information comprises the first risk point, determining second information, wherein the second information comprises information about a first interval and a second interval, the first interval is an interval in which the first vehicle travels at a constant speed, the second interval is an interval in which the first vehicle brakes, and the second interval is after the first interval; and
   building a first reaction model based on the first information and the second information, wherein the first reaction model indicates that after the first risk point occurs, the first vehicle travels at a constant speed in the first interval, and brakes in the second interval until stop.

8. The method according to claim 7, wherein the second information further comprises any one or more of the following:
   duration in which the first vehicle travels at a constant speed in the first interval, a start time point at which the first vehicle brakes in the second interval, a braking rate of the first vehicle, and a maximum braking deceleration of the first vehicle.

9. The method according to any one of claims 1 to 6, wherein the building the reaction model based on the first information comprises:

when the first information comprises the second risk point, determining third information, wherein the third information comprises information about a third interval and a fourth interval, the third interval is an interval in which the first vehicle travels at a constant speed, the fourth interval is an interval in which the first vehicle brakes, and the fourth interval is after the third interval; and

building a second reaction model based on the first information and the third information, wherein the second reaction model indicates that after the second risk point occurs and before the third risk point occurs, the first vehicle travels in a current travelling state, and after the third risk point occurs, the first vehicle travels at a constant speed in the third interval, and brakes in the fourth interval until stop.

10. The method according to claim 9, wherein the third information further comprises any one or more of the following: duration in which the first vehicle travels at a constant speed in the third interval, a start time point at which the first vehicle brakes in the fourth interval, a braking rate of the first vehicle, and a maximum braking deceleration of the first vehicle.

11. The method according to any one of claims 1 to 6, wherein the building the reaction model based on the first information comprises:

when the first information comprises the first risk point, determining fourth information, wherein the fourth information comprises information about a fifth interval and a sixth interval, the fifth interval is an interval in which the first vehicle travels in a straight line, the sixth interval is an interval in which the first vehicle steers, and the sixth interval is after the fifth interval; and

building a third reaction model based on the first information and the fourth information, wherein the third reaction model indicates that after the first risk point occurs, the first vehicle travels in a straight line in the fifth interval, and steers in the sixth interval until steering returns to center.

12. The method according to claim 11, wherein the fourth information further comprises any one or more of the following: duration in which the first vehicle travels in a straight line in the fifth interval, a peak value of a steering wheel angle at which the first vehicle steers in the sixth interval, and a steering wheel rotation cycle of the first vehicle.

13. The method according to any one of claims 1 to 6, wherein the building the reaction model based on the first information comprises:

when the first information comprises the second risk point, determining fifth information, wherein the fifth information comprises information about a seventh interval and an eighth interval, the seventh interval is an interval in which the first vehicle travels in a straight line, the eighth interval is an interval in which the first vehicle steers, and the eighth interval is after the seventh interval; and

building a fourth reaction model based on the first information and the fifth information, wherein the fourth reaction model indicates that after the second risk point occurs and before the third risk point occurs, the first vehicle travels in a current travelling state, and after the third risk point occurs, the first vehicle travels in a straight line in the seventh interval, and steers in the eighth interval until steering returns to center.

14. The method according to claim 13, wherein the fifth information further comprises any one or more of the following: duration in which the first vehicle travels in a straight line in the seventh interval, a peak value of a steering wheel angle at which the first vehicle steers in the eighth interval, and a steering wheel rotation cycle of the first vehicle.

15. A parameter calibration method for a reaction model, applied to a first vehicle, and comprising:

obtaining sixth information, wherein the sixth information comprises parameter information output by a reaction model, and the parameter information indicates a driving behavior of an average human driver corresponding to the first vehicle; the reaction model is built based on first information, the first information comprises information about a first risk point or a second risk point, the first risk point is an actual risk point that occurs on a road on which the first vehicle is located at a first moment, the second risk point is a potential risk point that occurs on the road on which the first vehicle is located at the first moment and that triggers a third risk point, and the third risk point is an actual risk point that occurs on the road on which the first vehicle is located in a first time period after the first moment; and the reaction model indicates an action behavior of the first vehicle after the first risk point or the second risk point occurs; and
obtaining a target parameter through calibration based on the sixth information, wherein the target parameter is used to assess autonomous driving performance of the first vehicle.

16. The method according to claim 15, wherein when the reaction model comprises a first reaction model or a second reaction model, the target parameter comprises any one or more of the following:

a maximum braking deceleration of the first vehicle, a braking efficiency improvement time of the first vehicle, a braking efficiency improvement rate of the first vehicle, and a decision reaction time of the average human driver corresponding to the first vehicle, wherein
the first reaction model indicates a braking behavior of the first vehicle after the first risk point occurs, and the second reaction model indicates a braking behavior of the first vehicle after the second risk point occurs.

17. The method according to claim 16, wherein the maximum braking deceleration of the first vehicle is obtained by calibrating N frames of data with large braking decelerations in the parameter information after the first risk point or the second risk point occurs, wherein N is an integer greater than 0.

18. The method according to claim 16, wherein the braking efficiency improvement time of the first vehicle is a difference between a braking saturation moment and a braking start moment, the braking start moment is obtained by calibrating at least two frames of data with small braking decelerations in the parameter information, and the braking saturation moment is obtained by calibrating at least two frames of data with large braking decelerations in the parameter information.

19. The method according to claim 16, wherein the braking efficiency improvement rate of the first vehicle is obtained by calibrating at least one frame of data with a small braking deceleration and at least one frame of data with a large braking deceleration in the parameter information.

20. The method according to claim 16, wherein the decision reaction time of the average human driver corresponding to the first vehicle is a difference between a braking start moment and an actual risk point occurrence moment, and the braking start moment is obtained by calibrating at least two frames of data with small braking decelerations in the parameter information.

21. The method according to claim 15, wherein when the reaction model comprises a third reaction model or a fourth reaction model, the parameter information comprises any one or more of the following:

a maximum steering wheel angle of the first vehicle, steering wheel return-to-center duration of the first vehicle, and a decision reaction time of the average human driver corresponding to the first vehicle, wherein
the third reaction model indicates a steering behavior of the first vehicle after the first risk point occurs, and the fourth reaction model indicates a steering behavior of the first vehicle after the second risk point occurs.

22. The method according to claim 21, wherein the maximum steering wheel angle of the first vehicle is obtained by calibrating M frames of data with large steering wheel angles in the parameter information after the first risk point or the second risk point occurs, wherein M is an integer greater than 0.

23. The method according to claim 21, wherein the steering wheel return-to-center duration of the first vehicle is a difference between a first return-to-center moment and a steering start moment, the steering start moment is obtained by calibrating at least two frames of data with small steering wheel angles in the parameter information, and the first return-to-center moment is obtained by calibrating at least two frames of data with large steering wheel angles in the parameter information.

24. The method according to claim 21, wherein the decision reaction time of the average human driver corresponding to the first vehicle is a difference between a steering start moment and an actual risk point occurrence moment, and the steering start moment is obtained by calibrating at least two frames of data with small steering wheel angles in the parameter information.

25. A communication apparatus, comprising a module or a unit configured to perform the method according to any one of claims 1 to 14 or claims 15 to 24.

26. A communication apparatus, comprising a processor, wherein
when the processor invokes a computer program or instructions in a memory, the method according to any one of claims 1 to 14 is performed, or the method according to any one of claims 15 to 24 is performed.

27. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 14 or claims 15 to 24, to obtain processed data, and the interface is configured to output the processed data.

28. A computer-readable storage medium, comprising:
the computer-readable storage medium is configured to store instructions or a computer program; and when the instructions or the computer program is executed, the method according to any one of claims 1 to 14 is implemented, or the method according to any one of claims 15 to 24 is implemented.

29. A computer program product, comprising instructions or a computer program, wherein
when the instructions or the computer program is executed, the method according to any one of claims 1 to 14 is performed, or the method according to any one of claims 15 to 24 is performed.

30. A vehicle end, comprising the communication apparatus according to claim 25, the communication apparatus according to claim 26, or the communication apparatus according to claim 27.

Applicable to a reasonably foreseeable scenario with a foreseeable sign

Applicable to a reasonably foreseeable scenario without a foreseeable sign

Defensive emergency steering model

Defensive emergency braking model

Non-defensive emergency steering model

Non-defensive emergency braking model

Indicator examples

Actual risk point

Potential risk point

Steering actuation

Braking actuation

Risk identification

Evaluation and decision-making

Foot action

Hand action

FIG. 1

EP 4 708 110 A1

S201

Obtain first information

S202

Build a reaction model based on the first information

FIG. 2

Ego

Wandering range

FIG. 3A

FIG. 3B

Risk point: Laterally deviate from the center line of the lane by 0.410 m

Center of a vehicle

Center line of a lane

Ego

FIG. 3C

Second vehicle

Ego vehicle

Vehicle 5

First vehicle

FIG. 4A

Third vehicle

Ego vehicle

Vehicle 5

First vehicle

FIG. 4B

Fourth vehicle

Ego vehicle

Vehicle B

Vehicle A

First vehicle

Fifth vehicle

FIG. 4C

**Non-defensive emergency braking model**

Opening degree of a brake pedal

Maximum braking deceleration

Braking opening-degree slope

Risk occurrence time point

Braking start time point

Constant-speed duration

$o$

Free travelling area

Constant-speed area

Mechanical actuation area

Time

**To-be-confirmed parameters:**
1. Risk occurrence time point
2. Constant-speed duration
3. Average braking delay in the industry
4. Average pressure building time in the industry
5. Average maximum braking deceleration in the industry
6. Braking start time point
7. Braking opening-degree slope
8. Maximum braking deceleration

A high-precision driving simulator needs to be used for tests

**Non-defensive emergency steering model**

Steering wheel angle

Peak value $\delta_{max}$ of a steering wheel angle

Risk occurrence time point

Straight-line duration

Steering wheel rotation cycle

$\delta_{max}\sin\dfrac{\pi}{T_2 - T_1}(t - T_1), \ \ if \ t > T_1$

$o$

Straight-line travelling area

$T_1$

Sine steering area

$T_2$

Time

**To-be-confirmed parameters:**
1. Risk occurrence time point
2. Straight-line duration
3. Yaw rotation inertia
4. Steering free stroke
5. Steering transmission ratio
6. Peak value of a steering wheel angle
7. Steering wheel rotation cycle

FIG. 5

S601

Obtain sixth information

S602

Obtain a target parameter through calibration based on the sixth information

FIG. 6

Communication apparatus 70

701

Communication unit

702

Processing unit

FIG. 7

Communication apparatus 80

801

Communication interface

802

Processor

FIG. 8

Chip 90

Memory
903

Processor
901

Interface 902

FIG. 9

## INTERNATIONAL SEARCH REPORT

| International application No. |
|---|
| **PCT/CN2024/090697** |

| **A.** | **CLASSIFICATION OF SUBJECT MATTER** |
|---|---|

G06F30/20(2020.01)i; B60W60/00(2020.01)i

According to International Patent Classification (IPC) or to both national classification and IPC

| **B.** | **FIELDS SEARCHED** |
|---|---|

Minimum documentation searched (classification system followed by classification symbols)

IPC: G06F B60W

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; IEEE; 百度, BAIDU; 读秀, DUXIU: 智能驾驶, 自动驾驶, 风险, 潜在, 反应, 路况, 车道, Intelligent Drive, automatic drive, risk, potential, reaction, road condition, lane

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 111444468 A (TENCENT TECHNOLOGY (SHENZHEN) CO., LTD.) 24 July 2020 (2020-07-24)<br>description, paragraphs [0050]-[0138], and figures 1-8 | | 1-30 |
| A | CN 111710187 A (TENCENT TECHNOLOGY (SHENZHEN) CO., LTD.) 25 September 2020 (2020-09-25)<br>entire document | | 1-30 |
| A | CN 111489588 A (TENCENT TECHNOLOGY (SHENZHEN) CO., LTD.) 04 August 2020 (2020-08-04)<br>entire document | | 1-30 |
| A | CN 114446042 A (TENCENT TECHNOLOGY (SHENZHEN) CO., LTD.) 06 May 2022 (2022-05-06)<br>entire document | | 1-30 |
| A | CN 112232581 A (TENCENT TECHNOLOGY (SHENZHEN) CO., LTD.) 15 January 2021 (2021-01-15)<br>entire document | | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 July 2024** | **16 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| Information on patent family members | | PCT/CN2024/090697 |

| Patent document cited in search report | | | Publication date (day/month/year) | Patent family member(s) | | | Publication date (day/month/year) |
|---|---|---|---|---|---|---|---|
| CN | 111444468 | A | 24 July 2020 | CN | 111444468 | B | 12 December 2023 |
| CN | 111710187 | A | 25 September 2020 | None | | | |
| CN | 111489588 | A | 04 August 2020 | CN | 111489588 | B | 09 January 2024 |
| CN | 114446042 | A | 06 May 2022 | CN | 114446042 | B | 24 November 2023 |
| CN | 112232581 | A | 15 January 2021 | CN | 112232581 | B | 12 April 2024 |
| | | | | HK | 40037793 | A0 | 18 June 2021 |

Form PCT/ISA/210 (patent family annex) (July 2022)

**EP 4 708 110 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310546008